# EUROPEAN PATENT APPLICATION

(11) **EP 1 021 011 A2**
(43) Date of publication of application: **19.07.2000**
(21) Application number: 00100921.6
(22) Date of filing: 18.01.2000
(51) Int. Cl.: H04J 14/02

(54) **Communication node, WDM network, and network communication method**

(30) Priority: 18.01.1999 JP 982399; 18.01.1999 JP 982599
(71) Applicant: NEC CORPORATION, Tokyo (JP)
(72) Inventor: Takagi, Kazuo, Minato-ku, Tokyo (JP)
(74) Representative: Glawe, Delfs, Moll & Partner

(57) **Abstract**

Communication nodes 510, 520, 530, 540, 550 are circularly connected by using two-way fibers 501-1 to 501-5 (hereafter, referred to simply as 501) and 502-1 to 502-5 (hereafter, referred to simply as 502). On the physical transmission network of (a), a working light wave path 560-N of a wavelength of λi is set through the communication node 550 between the communication node 510 and the communication node 540 as shown in (b). Between the communication node 510 and the communication node 540, a working light wave path 561-N is set through the communication nodes 520, 530. Between the communication node 520 and the communication node 530, a working light wave path 570-N of a wavelength of λj is set through the communication nodes 510, 550, 540. Between the communication node 520 and the communication node 530, a working light wave path 571-N of a wavelength of λj provided between them is set, and a total of four working light wave paths are set. All the working light wave paths 560-N, 561-N, 570-N, 571-N are set by using two-way fibers 501. To each of the working light wave paths 560-N, 561-N, 570-N, 571-N, standby light wave paths used as detours at the time of an obstacle are physically prepared both in the span direction (the same direction as the working light wave path) and in the ring direction (opposite direction of the working light wave path) on two-way fibers 502, but they are not set logically. The working light wave paths 560-N, 561-N and the standby light wave paths for them have the same wavelength of λi. The working light wave paths 570-N, 571-N and the standby light wave paths for them have the same wavelength of λj.

## Description

### BACKGROUND OF THE INVENTION

### 1. FIELD OF THE INVENTION

The present invention relates to a communication node, a WDM network, and a network communication method, and more particularly relates to a communication node, a WDM network, and a network communication method in which an obstacle can be detected and restored for each light wave path.

### 2. DESCRIPTION OF RELATED ART

The requirement for a large capacity communication path has been raised accompanied with the spread of the Internet or the multimedia communication. The Wavelength Division Multiplexing (hereafter, referred to simply as WDM) transmission technology in which a plurality of wavelengths are multiplexed on one optical fiber to be transmitted is expected to be a technology for performing a large capacity communication. Together with that, a highly reliable protection system similar to "SONET, GR-1230-CORE, ISSUE 3 DECEMBER, 1996, published by Bellcore" on which conventional transmission networks are based is wanted, and in the WDM transmission network, such a protection as described in "Multi-wavelength Survivable Ring Network Architectures, A. F. Elrefaie, ICC '93 pp. 1245-1251" is also examined.

In the WDM transmission network, an obstacle of the light source or the receiver of the used wavelength is considered. In the case of a conventional system, an obstacle is detected by the WDM signal after the multiplexing of the wavelength. However, only the detection of an obstacle is performed, but the individual detection of an obstacle is not performed for each signal of the respective wavelengths. Therefore, in the sequential obstacle restoration work, first of all, it is necessary to examine and specify the light source or the receiver in which an obstacle has occurred for each wavelength. Therefore, there is such a problem in that the obstacle cannot be efficiently restored.

Furthermore, the conventional system has been a system in which a detour light wave path is configured by being switched to a standby fiber of a communication node adjacent to the obstacle section, in order to avoid the use of a working fiber in the obstacle section. Therefore, there has been such a problem in that the transmitting distance of the detour light wave path is long and the network scale is limited.

### SUMMARY OF THE INVENTION

It is a first object of the present invention to provide a communication node, a WDM network, and a network communication method in which an obstacle is detected for each light wave path so that the restoration of an obstacle can be performed for each light wave path.

It is a second object of the present invention to provide a communication node, a WDM network, and a network communication method in which the restoration of an obstacle can surely be performed in the case where a restorable obstacle of a light wave path occurs and further, it is possible to set a light wave path of an additional data path (hereafter, referred to as ET (Extra Traffic)) by using a network resource for the detour in the normal state where no obstacle occurs.

A communication node of the present invention comprises a light wave path termination processor circuit which monitors the state of a received light signal transmitted by at least one working light wave path and detects presence or absence of an obstacle from the result, a light wave path switching circuit which switches the path from the working light wave path to at least one standby light wave path in the case where the obstacle is detected, a bridge circuit which transfers the same signal to each of the at least one standby light wave path, and a selector circuit which selects one standby light wave path from the at least one standby light wave path.

A WDM network of the present invention comprises a plurality of communication nodes and a light transmitting passage circularly connecting the plurality of communication nodes, and the plurality of communication nodes comprise the communication nodes.

A network communication method of the present invention is a network communication method of performing the communication by using a light wave path of a certain properly set wavelength between any two of a plurality of circularly connected communication nodes, and it comprises detecting an obstacle of a current light wave path which is the light wave path used for the communication, and setting a standby light wave path instead of the working light wave path in which an obstacle is detected.

### BRIEF DESCRIPTION OF THE DRAWINGS

The above and other objects, features and advantages of the present invention will become more apparent from the following detailed description when taken in conjunction with the accompanying drawings wherein:
Fig. 1 is a block diagram of a conventional communication node used in a WDM optical network;
Fig. 2 is a view for describing a conventional obstacle restoration system;
Fig. 3 is a view for describing a conventional obstacle restoration system in a WDM optical network;
Fig. 4 is a view for describing problems in the case where two pieces of light wave paths are set in a WDM optical network according to the prior art;
Fig. 5 is a view for describing an obstacle restoration system according to a first embodiment of the present invention;
Fig. 6 is a drawing of an obstacle restoration sequence of a wavelength group of a wavelength of λi in an obstacle restoration system according to the first embodiment of the present invention;
Fig. 7 is a drawing of a light wave path network of a wavelength group of a wavelength of λi when an obstacle is restored by using an obstacle restoration system according to the first embodiment of the present invention;
Fig. 8 is a drawing of an obstacle restoration sequence of a wavelength group of a wavelength of λj in an obstacle restoration system according to the first embodiment of the present invention;
Fig. 9 is a drawing of a light wave path network of a wavelength group of a wavelength of λj when an obstacle is restored by using an obstacle restoration system according to the first embodiment of the present invention;
Fig. 10 is a block diagram of a communication node used in the first embodiment of the present invention;
Fig. 11 is another block diagram of a communication node used in the present invention;
Fig. 12 is a drawing of a data transfer light wave path network and a signaling channel or signaling path transfer light wave path network;
Fig. 13 is a sequence drawing of the optimum standby light wave path switching of a wavelength group of a wavelength of λi at a second stage in an obstacle restoration system according to a second embodiment of the present invention;
Fig. 14 is a drawing showing the time-varying of a light wave path network in a sequence of the optimum standby light wave path switching of a wavelength group of a wavelength of λi at a second stage in an obstacle restoration system according to a second embodiment of the present invention;
Fig. 15 is a sequence drawing of the optimum standby light wave path switching of a wavelength group of a wavelength of λj at a second stage in an obstacle restoration system according to a second embodiment of the present invention;
Fig. 16 is a drawing showing the time-varying of a light wave path network in a sequence of the optimum standby light wave path switching of a wavelength group of a wavelength of λj at a second stage in an obstacle restoration system according to a second embodiment of the present invention;
Fig. 17 is a block diagram of a communication node used in a second embodiment of the present invention;
Fig. 18 is another block diagram of a communication node used in a second embodiment of the present invention;
Fig. 19 is a block diagram of a WDM optical network for describing an obstacle restoration method of a third embodiment of the present invention;
Fig. 20 is an obstacle restoration sequence drawing of a wavelength group of a wavelength of λi in an obstacle restoration method of a third embodiment of the present invention;
Fig. 21 is a drawing showing the time-varying of a light wave path network of a wavelength group of a wavelength of λi when restoring an obstacle;
Fig. 22 is an obstacle restoration sequence drawing of a wavelength group of a wavelength of λj in a third embodiment of the present invention;
Fig. 23 is a drawing showing the time-varying of a light wave path network of a wavelength group of a wavelength of λj when restoring an obstacle;
Fig. 24 is a block diagram showing one example of a communication node configuration used in an obstacle restoration method of a third embodiment of the present invention;
Fig. 25 is a block diagram showing another configuration of a communication node used in an obstacle restoration method of a third embodiment of the present invention; and
Fig. 26 is a drawing showing a data transfer light wave path network and a signaling channel or signaling path transfer light wave path network.

### DETAILED DESCRIPTION OF THE PREFERRED EMBODIMENTS

First of all, the conventional communication node, WDM network, and network communication method will be described before describing the communication node, WDM network, and network communication method of the present invention, for making it easy to understand the invention.

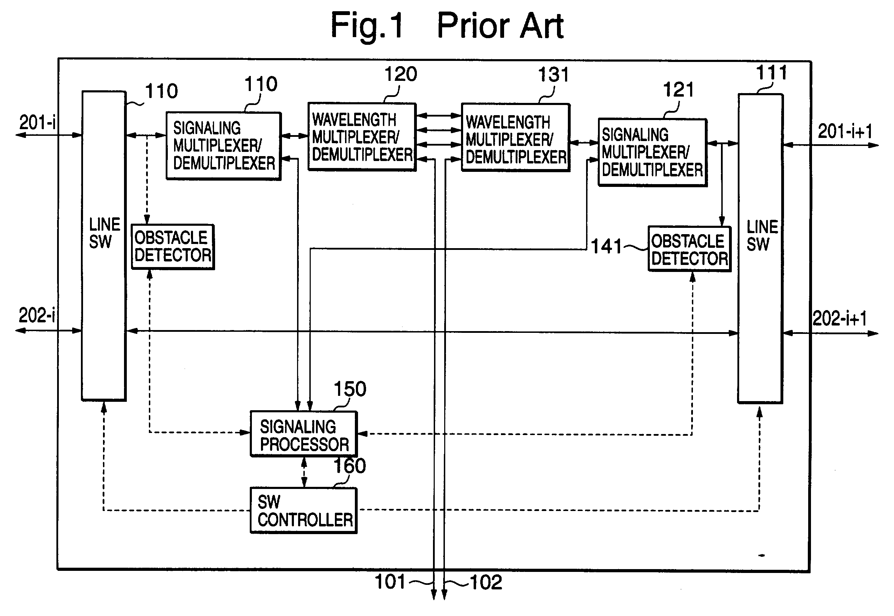

First, the protection system of the conventional WDM optical network will be described by referring to Fig. 1 to Fig. 3. In order to simplify the description, a two-way fiber is used below, but the function does not change even when separated by using one-way fibers.

Fig. 1 shows the constitution of a conventional communication node. The communication node of Fig. 1 comprises switches (Line SW) 110, 111, signaling multiplexers/demultiplexers 120, 121, wavelength multiplexers/demultiplexers 130, 131, obstacle detectors 140, 141; a signaling processor 150, and a SW controller 160.

Among input-output ports 201-i, 201-(i+1), 202-i, 202-(i+1) respectively provided to the Line SW's 110, 111, the input-output ports 201-i, 201-(i+1) are input-output ports connected to a working physical path connecting the adjacent communication nodes, and a wavelength multiplexing signal made by multiplexing a working system of a virtual communication passage (hereafter, referred to as a light wave path) connecting arbitrary communication nodes by using a wavelength is outputted. Furthermore, the input-output ports 202-i, 202-(i+1) are similarly input-output ports connected to a standby passage, and a wavelength-multiplexed signal made by multiplexing light wave paths of a standby system of the light wave paths of the working system is outputted.

In the normal state when no obstacle has occurred, the WDM signals inputted from the input-output ports 201-i, 201-(i+1) (hereafter, referred to simply as 201) are respectively inputted into the signaling multiplexing separators 120, 121 through the Line SW's 110, 111. Furthermore, part of the WDM signals from the Line SW's 110, 111 are inputted into obstacle detectors 140, 141. The signaling multiplexing separators 120, 121 separate the signaling signals from among the transferred WDM signals and transfer them to the signaling processor 150, and transfer the data WDM signals which are residual data components to the wavelength multiplexers/demultiplexers 130, 131. The data WDM signals inputted into the wavelength multiplexers/demultiplexers 130, 131 are separated into light wave paths of the respective wavelengths, and the light wave paths of wavelengths terminated in the illustrated communication node are outputted from the input-output ports 101, 102, and the light wave paths of wavelengths not to be terminated are respectively transferred to the wavelength multiplexing separators 131, 130.

The wavelength multiplexers/demultiplexers 130, 131 multiplex the light wave paths of those wavelengths and the light wave paths of wavelengths inputted from the input-output ports 101, 102 to create data WDM signals, and transfer them to the signaling multiplexing separators 120, 121. The signaling multiplexers/demultiplexers 120, 121 multiplex the signaling signals transferred from the signaling processor 150 to the data WDM signals to constitute WDM signals. After that, the WDM signals are outputted from the input-output ports 201-i, 201-(i+1) through the Line SW's 110, 111.

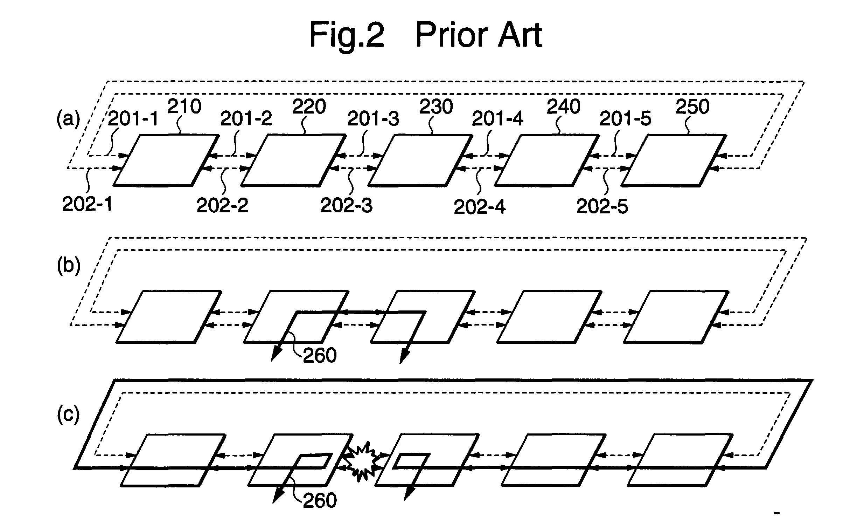

Next, a case where an obstacle has occurred will be described as for a series of actions until the finish of the obstacle restoration by referring to Fig. 2.

Fig. 2 is a drawing showing the constitution of a physical/light wave path network. Fig. 2 (a) shows the constitution of a physical network circularly connecting the communication nodes 210, 220, 230, 240, 250 with the constitution shown in Fig. 1 by using the working fibers 201-1 to 201-5 which are the working passage of the light wave path and the standby fibers 202-1 to 202-5 which are the standby passage of the light wave path. On the physical network shown in Fig. 2 (a), a light wave path 260 using the working fiber 201-3 is set as shown in Fig. 2 (b) between the communication nodes 220, 230.

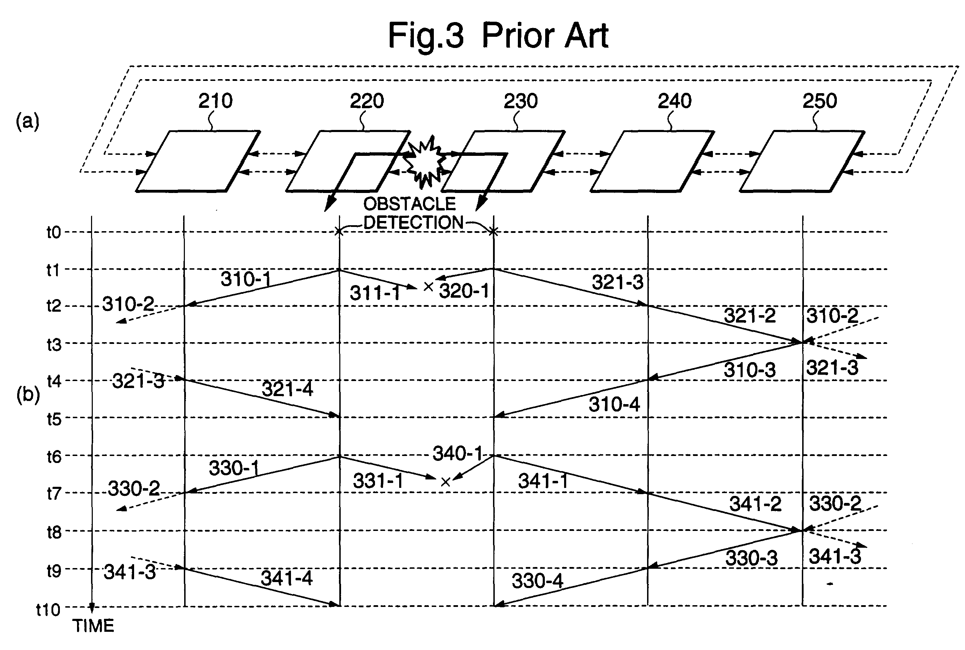

A case when an obstacle has occurred in the working/standby fibers 201-3, 202-3 between the communication nodes 220, 230 in the network shown in Fig. 2(b) will be described by referring to Fig. 1 and Fig. 3.

As shown in Fig. 3(a), an obstacle occurs in the working/standby fibers 201-3, 202-3 between the communication nodes 220, 230, and as shown in Fig. 3(b), the obstacle detectors 141, 140 of each of the communication nodes 220, 230 detect an obstacle on the basis of the lowering of the amount of light of the WDM signal at the time t0, and respectively notify the signaling processor 150 in the own communication node. At the time t1, the signaling processor 150 creates a Line passage switching request information. After that, the communication nodes 220, 230 respectively transfer the Line passage switching request informations 310, 311 and 320, 321 letting each other be the termination of transfer.

The signaling processor 150 of the communication node 220 receiving the Line passage switching request information 321 at the time t5 makes the Line SW 111 to the turning mode through the SW controller 160, and changes the connection of the signaling multiplexer/demultiplexer 121 and the working fiber 201-3 into the connection of the signaling multiplexer/demultiplexer 121 and the Line SW 110. Similarly, the signaling processor 150 of the communication node 230 receiving the Line passage switching request information 310 makes the Line SW 110 to the turning mode through the SW controller 160, and changes the connection of the signaling multiplexer/demultiplexer 120 and the working fiber 201-3 into the connection of the signaling multiplexer/demultiplexer 120 and the Line SW 111.

After that, at the time t6, the signaling processors 150 of the communication nodes 220, 230 respectively send out the Line passage switching response informations 330, 331 and 340, 341 letting each other be the termination of transfer. As a result of that, as shown in Fig. 2 (c), a path substituting for the light wave path 260 is formed through the communication nodes 210, 250, 240 using the standby fibers 202-2, 202-1, 202-5, 202-4 to recover from the obstacle.

In the WDM optical network, it is also considered that an obstacle of a light source or a light receiver of a wavelength to be used may occur. In the conventional system, an obstacle is detected by the WDM signal after the multiplexing of the wavelengths, but only the detection of an obstacle is performed. It is not performed to detect an individual obstacle for each of the signals of the respective wavelengths. Therefore, in the subsequent obstacle restoration work, the restoration work should be performed after a light source or a receiver where an obstacle occurred has been specified first by performing examination for each wavelength. Therefore, there is such a problem that the obstacle cannot efficiently be restored.

Furthermore, since it is a system in which a detour light wave path is configured by switching the fiber to a standby fiber of a communication node adjacent to the obstacle section for avoiding the use of the working fiber in the obstacle section, the transmitting distance of the light wave path is long. Therefore, there is such a problem that the scale of the network is limited.

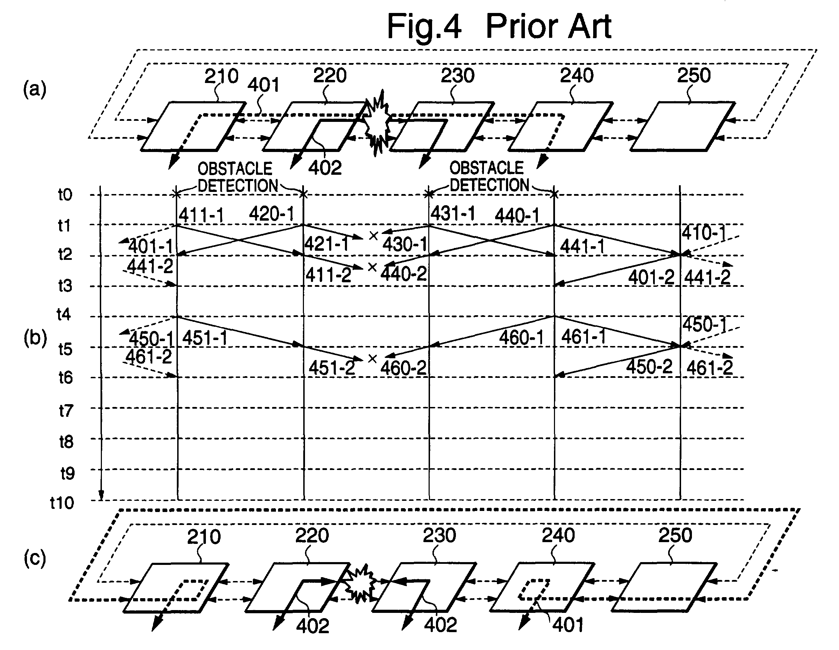

Furthermore, in the network identical with that in Fig. 2(a), as shown in Fig. 4, the light wave paths 401, 402 configured from wavelengths λj, λk are respectively set between the communication nodes 210, 240 and between the communication nodes 220, 230 by using the current fibers 201, and the case where an obstacle has occurred between the communication nodes 220, 230 is supposed. Since the lowering of the amount of light of the WDM signal occurs by this obstacle, the obstacle detectors 140 or 141 of the communication nodes 210, 220, 230, 240 detect an obstacle on the current fiber 201 taking that as a momentum.

As a result of the obstacle restoration sequence shown in Fig. 4(b), in the communication nodes 210, 240, the Line SW's 111, 110 on the obstacle occurrence side are respectively switched, but at this moment, as shown in Fig. 4(c), there is such a problem that the obstacle cannot be restored in the light wave path 402 terminated between the communication nodes 220, 230 since it is turned at the communication nodes 210, 240 on the opposite side of the obstacle occurrence of the respective communication nodes 220, 230 for forming the detour light wave path 401.

Next, embodiments of the present invention will be described by referring to drawings.

### (First embodiment)

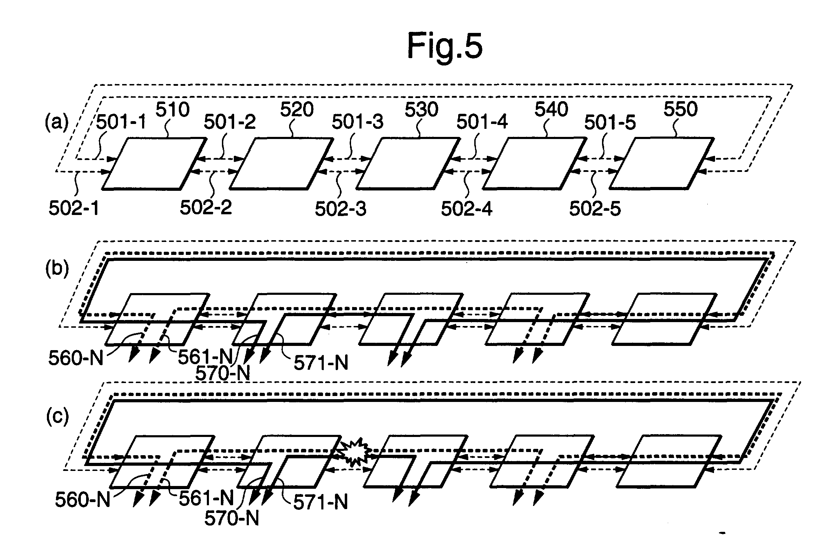

Fig. 5 to Fig. 13 are drawings for describing a first embodiment of the present invention. Fig. 5 shows a WDM transmission network using the communication nodes 510, 520, 530, 540, 550. Fig. 5(a) is a physical network connection diagram, and Fig. 5(b) shows a network of the light wave path (hereafter, referred to as a working light wave path) used at the normal time and using the wavelengths λi, λj.

As shown in Fig. 5(a), the communication nodes 510, 520, 530, 540, 550 are circularly connected by using the two-way fibers 501-1 to 501-5 (hereafter, referred to simply as 501) and 502-1 to 502-5 (hereafter, referred to simply as 502). On the physical transmission network of Fig. 5(a), as shown in Fig. 5(b), between the communication node 510 and the communication node 540, a working light wave path 560-N of a wavelength of λi going through the communication node 550 is set. Between the communication node 510 and the communication node 540, a working light wave path 561-N of a wavelength of λi going through the communication nodes 520, 530 is set. Between the communication node 520 and the communication node 530, a working light wave path 570-N of a wavelength of λj going through the communication nodes 510, 550, 540 is set. Between the communication node 520 and the communication node 530, a current light wave path 571-N of a wavelength of λj provided between them is set, so that a total of four pieces of working light wave paths may be set.

All the working light wave paths 560-N, 561-N, 570-N, 571-N are set by using two-way fibers 501. To each of the working light wave paths 560-N, 561-N, 570-N, 571-N, the light wave path used as a detour at the time of an obstacle (hereafter, referred to as a standby light wave path) is physically prepared in each of the span direction (direction identical with that of the current light wave path) and the ring direction (opposite direction of the working light wave path) on the two-way fiber 502, but it is not logically set. In the present embodiment, the working light wave paths 560-N, 561-N and the standby light wave paths for them have the same wavelength of λi, and the current light wave paths 570-N, 571-N and the standby light wave paths for them have the same wavelength of λj.

In the present embodiment, the working light wave paths and the standby light wave paths for them have the same wavelength, but the wavelengths thereof may be different. Furthermore, in the present embodiment, the physical wavelength used between the respective physical rings on the passage of the light wave path is a single wavelength for constituting one light wave path, but this may also be a combination of different wavelengths. That is, it is sufficient that the wavelength resource is independently allocated to each of the working light wave path and the standby light wave path. Considering this, a group of wavelengths comprising a wavelength of the working light wave path and a wavelength of the standby light wave path thereof is defined as a wavelength group, and it is used below.

In the present embodiment, the number of wavelength groups is two and the number of wavelengths constituting each wavelength group is 1. Furthermore, each of the communication nodes 510, 520, 530, 540, 550 has the light wave path termination processing function of detecting an obstacle of a light wave path terminated by the own communication node, the light wave path switching function of switching the light wave path, and the signaling processing function of performing the exchange of the light wave path switching control information. The detection of the light wave path can be performed, for example, on the basis of the increase of the bit error rate of the received signal.

The signaling processing function is prepared for each wavelength group, and each of the communication nodes 510, 520, 530, 540, 550 has at least a signaling processing function of the wavelength group to which the light wave path terminated in the own communication node is belonged. Furthermore, the signaling channel of transferring the path switching information is set between the adjacent communication nodes having the same wavelength group.

The case where a fiber obstacle has occurred, as shown in Fig. 5(c), in the two-way fiber 501-3 provided between the communication node 520 and the communication node 530 will be described.

When an obstacle occurs because of an obstacle in the working light wave paths 561-N, 571-N going through the two-way fiber 501-3, the occurring obstacle is detected in the communication nodes 510, 540 and the communication nodes 520; 530 which are both ends of the respective working light wave paths 561-N and 571-N. Each of the communication nodes 510, 520, 530, 540 detecting an obstacle starts the obstacle restoration process. The obstacle restoration process is performed for each wavelength group.

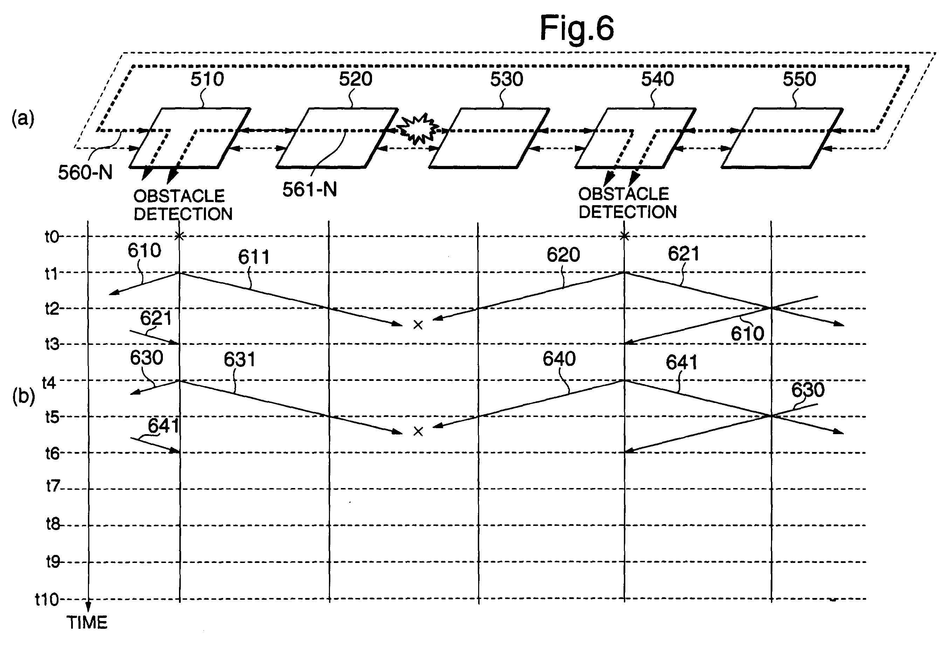

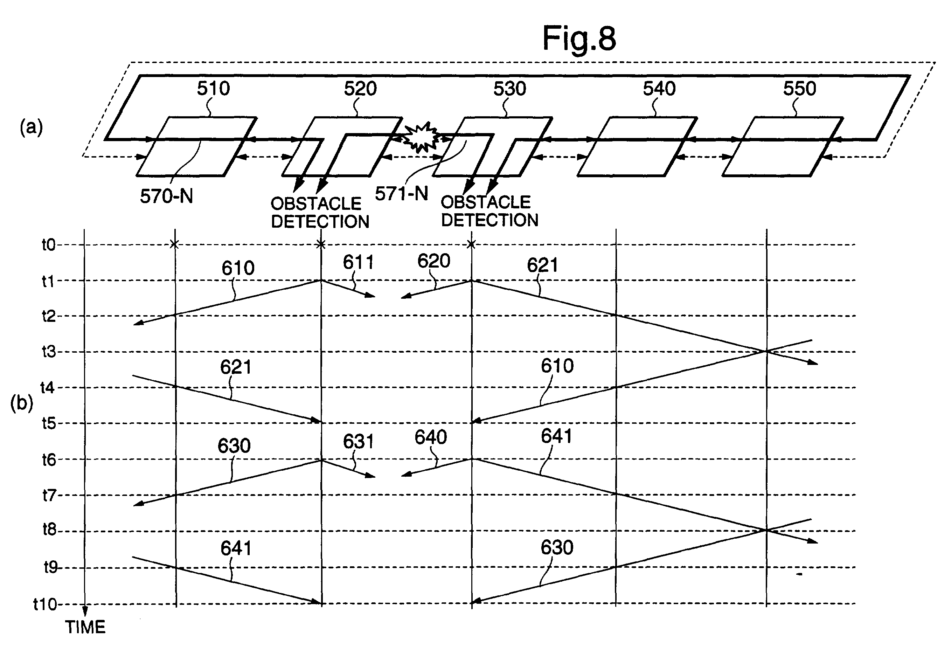

Fig. 6 and Fig. 8 are drawings showing the obstacle restoration information exchanging sequence for the obstacle restoration in the present embodiment. Fig. 6 is a drawing showing the obstacle restoration information exchanging sequence of the wavelength group of a wavelength of λi. Fig. 8 is a drawing showing the obstacle restoration information exchanging sequence of the wavelength group of a wavelength of λj. The obstacle restoration information exchanging sequences of the respective wavelength groups are independent and are performed in parallel.

First, the obstacle restoration information exchanging sequence of the wavelength group of a wavelength of λi in Fig. 6 and the path switching action will be described. As shown in Fig. 6 (a), the case where an obstacle has occurred between the communication node 520 and the communication node 530 will be considered. In this case, as shown in Fig. 6 (b), at the time t0, the communication node 510 and the communication node 540 detecting an obstacle select one or a plurality of usable pieces among the plurality of standby light wave paths. At the time t1, the path switching request informations 610, 611 and 620, 621 including the selected standby light wave path information are told to the communication nodes 540, 510 which are respectively the other ends of the working light wave path 561-N.

At the time t3, each of the communication nodes 510, 540 receiving the path switching request informations 621, 610 determines one from the told selected standby light wave path and the standby light wave path selected by the own communication node. In each of the communication nodes, the reception path is switched from the current light wave path to the determined standby light wave path. At the time t4, the path switching response informations 630, 631 and 640, 641 including the determined standby light wave path information are told to the communication nodes 540, 510 of the other ends of the opposite working light wave path 561-N.

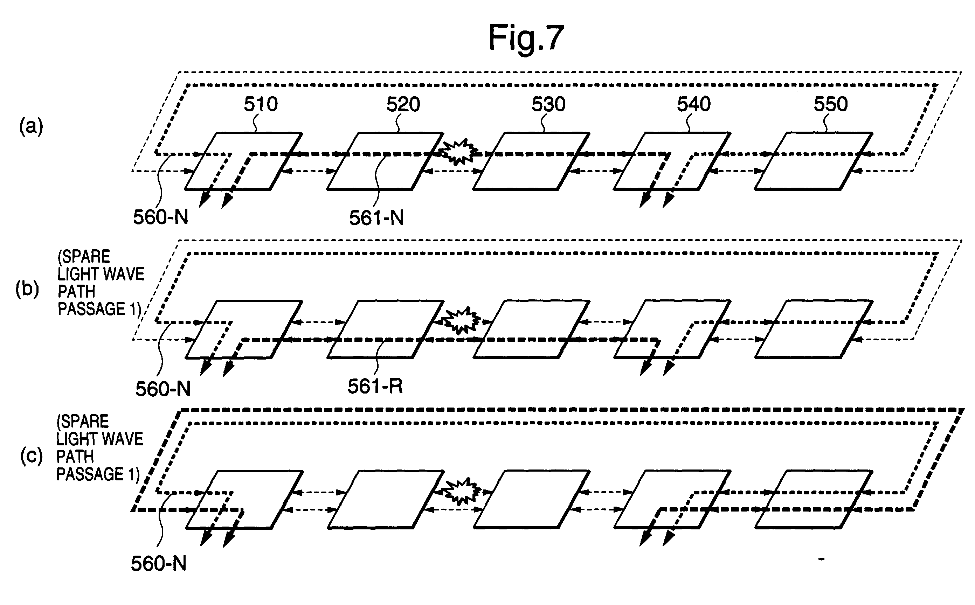

At the time t6, the communication nodes 510, 540 receiving the path switching response informations 641, 630 switches the transmission side path of the working light wave path 561-N to the determined standby light wave path. As a result of this, at the time t6, the standby light wave path 561-R is set in both directions as (standby light wave path 1) and (standby light wave path 2) respectively shown in Figs. 7(b), 7(c) to be switched from the working light wave path 561-N, and the communication passage between the communication node 510 and the communication node 540 is recovered from the obstacle. In (standby light wave path 1) shown in Fig. 7, the standby light wave path 561-R is set by using the two-way fiber 502 in the span direction. Furthermore, in (standby light wave path 2) in Fig. 7, the standby light wave path 561-R is set by using the two-way fiber 502 in the ring direction going through the communication node 550.

The obstacle restoration information exchanging sequence of the wavelength group of a wavelength of λj shown in Figs. 8 (a), 8 (b) and the path switching action are similar to those of the wavelength group of a wavelength of λi shown in Fig 6. However, the communication nodes which exchange the path switching control information are the communication node 520 and the communication node 530.

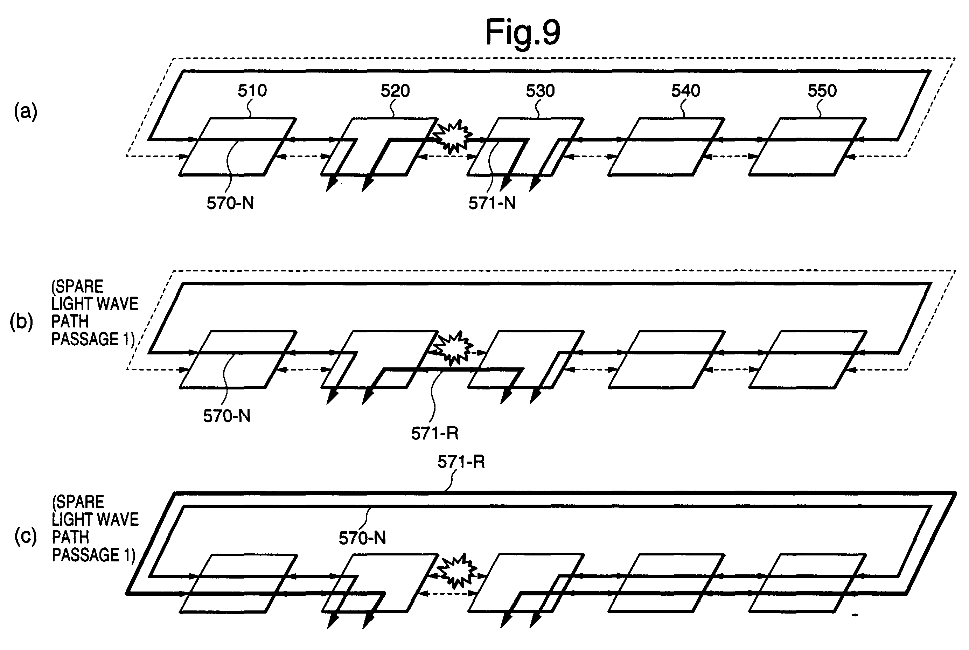

Fig. 9 shows an example of setting of the standby light wave path 571-R to be set to a wavelength of λj. In (standby light wave path passage 1) shown in Fig. 9 (b), the standby light wave path 571-R is set by using the two-way fiber 502 in the span direction. Furthermore, in (standby light wave path passage 2) shown in Fig. 9 (c), the standby light wave path 571-R is set through the communication nodes 510, 550, 540 by using the two-way fiber 502 in the ring direction.

Thus, in the ring constitution of the present embodiment, there are at least two pieces of passages in the span direction and in the ring direction as a candidate of the standby light wave path.

In the case of selecting one or a plurality of candidates of the standby light wave path when detecting an obstacle, or in the case of selecting one from among a plurality of candidates of the standby light wave path by exchanging the path switching request information, these are selected according to the predetermined order. As an example of the standard of this order, there are the number of hops, transmitting distance, obstacle restoration probability, usage efficiency of the network resource or the like.

Furthermore, it is also possible to perform the switching from the working light wave path to the standby light wave path by the wavelength switching besides the described physical path passage switching. In this case, it is also possible that the wavelength group comprises a plurality of wavelengths, and that the switched standby light wave path is physically a passage identical with the working light wave path passage.

Furthermore, when the standby light wave path is not used, in order to raise the utilization factor of a network, an ET light wave path is configured by using the network resource of the passage/wavelength of part of or all of the standby light wave path so that an additional or auxiliary signal may be transferred. At the time of an obstacle, in the case where the ET light wave path uses part of or all of the standby light wave path selected for the obstacle restoration, the path switching request/response information is also told to the terminating communication node of the ET light wave path. In the case where a plurality of candidates of the standby light wave path exist, they are told to all corresponding ET light wave path terminating communication nodes. When receiving the path switching request information, the ET light wave path terminating communication node stops the use of the ET light wave path. Furthermore, when receiving the path switching request response information, in the case where the standby light wave path finally determined as a detour shares the network resource with the ET light wave path whose use is stopped, the setting of the standby light wave path is performed. On the contrary, in the case where the standby light wave path finally determined as a detour does not share the network resource with the ET light wave path whose use is stopped, the use of the ET light wave path is restarted.

As mentioned above, a wavelength of a current light wave path and a wavelength of a standby light wave path form a wavelength group, and an obstacle is detected at an end of the light wave path, and the path switching information exchange for the obstacle restoration is performed for each wavelength group, and the path is switched from the working light wave path receiving an obstacle to the standby light wave, and consequently, the obstacle restoration can be performed.

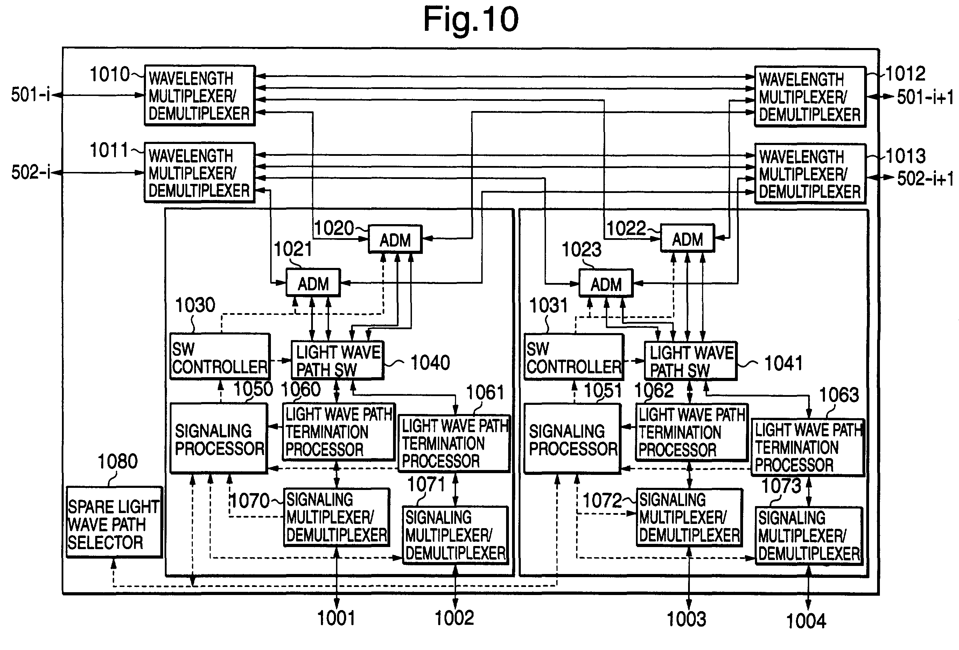

Next, the constitution of the communication nodes 510, 520, 530, 540, 550 for performing the obstacle restoration performed in the present embodiment will be described by referring to Fig. 10. By the way, the WDM transmission network to which the communication node shown in Fig. 10 is applied is configured from four wavelengths. In the communication node of Fig. 10, the signaling channel is multiplexed to the light wave path together with the main signal data.

The communication node of Fig. 10 comprises wavelength multiplexers/demultiplexers 1010 to 1013, branch couplers (hereafter, referred to as ADM (Add-Drop Multiplexer) 1020 to 1023, light wave path SW's 1040, 1041, light wave path termination processors 1060 to 1063, signaling multiplexers/demultiplexers 1070 to 1073, signaling processors 1050, 1051, SW controllers 1030, 1031, and a standby light wave path selector 1080. The light wave path termination processors 1060 to 1063 are arranged only to the light wave path terminated in the communication node shown in Fig. 10. Furthermore, the light wave path SW's 1040, 1041, the SW controllers 1030, 1031, and the signaling processors 1050, 1051 are prepared for each wavelength group terminated in the communication node shown in Fig. 10.

The WDM signals inputted from the input-output ports 501-i, 501-(i+1) (hereafter, referred to simply as 501) and 502-i, 502-(i+1) (hereafter, referred to simply as 502) are separated into the light wave paths of the respective wavelengths in the wavelength multiplexers/demultiplexers 1010 to 1013. The separated light wave paths are classified into light wave paths of a wavelength group penetrating the communication node shown in Fig. 10 and light wave paths of a wavelength group to be terminated.

The light wave paths of a wavelength group penetrating the communication node shown in Fig. 10 are transferred to the desired wavelength multiplexers/demultiplexers 1010 to 1013 as they are.

The light wave paths of a wavelength group to be terminated in the communication node shown in Fig. 10 are transferred to the ADM's 1020 to 1023. The light wave paths to be terminated in the communication node of Fig. 10 are dropped at the ADM's 1020 to 1023, and are transferred to the signaling multiplexers/demultiplexers 1070 to 1073 through the light wave path SW's 1040, 1041 and the light wave path termination processors 1060 to 1063, and they are separated into the signaling channel and the data path in the signaling multiplexing separators 1070 to 1073. The signaling channel is transferred to the signaling processors 1050, 1051, and the data path is outputted from the input-output ports 1001 to 1004. The light wave paths not to be terminated in the communication node shown in Fig. 10 are filtered at the ADM's 1020 to 1023 and are transferred to the wavelength multiplexing separators 1010 to 1013.

The data path inputted from the input-output ports 1001 to 1004 of the communication node shown in Fig. 10 are multiplexed with the signaling channel from the signaling processors 1050, 1051 at the signaling multiplexers/demultiplexers 1070 to 1073, and after that, they are converted into the desired light wave path at the light wave path termination processors 1060 to 1063, and go through the light wave path SW's 1040, 1041, and are inserted at the ADM's 1020 to 1023, and they are transferred to the wavelength multiplexers/demultiplexers 1010 to 1013.

The wavelength multiplexers/demultiplexers 1010 to 1013 multiplex the light wave paths filtered or inserted at the communication node shown in Fig. 10, and transfer them to the input-output ports 501, 502 as the WDM signal.

The light wave path termination processing function at the end of the light wave path in the present embodiment is implemented by the light wave path termination processors 1060 to 1063. Similarly, the signaling processing function of performing the path switching control of the path switching information exchange or the like is implemented by the signaling processors 1050, 1051. The path end switching function at the time of an obstacle is implemented by the signaling processors 1050, 1051 which switches the desired ADM's 1020 to 1023 and the light wave path SW's 1040, 1041 through the SW controllers 1030, 1031. When the standby path switching of the light wave path is a physical switching of the path passage, it is desirable that the light wave path SW's 1040, 1041 are implemented by space switches. When the switching is a wavelength switching, it is desirable that they are wavelength conversion switches. In the case where both are mixed, it is necessary to have both switch functions.

The standby light wave path selector 1080 has the standby light wave path information for each wavelength group. For the path selecting request of the standby light wave path to a certain current light wave path from the signaling processors 1050, 1051, one or a plurality of candidates of the standby light wave path are told from among the usable standby light wave paths according to the determining order of the number of hops, transmitting distance, efficient use of the network resource or the like.

In the case where the selected standby light wave path told from the communication node terminating the other end of the same working light wave path told from the signaling processors 1050, 1051 is different from the standby light wave path selected in the own communication node, the standby light wave path selector 1080 compares the orders of both, and identically determines the standby light wave path, and notifies the signaling processors 1050, 1051.

In the case where part of or all of the standby light wave path is used as the ET light wave path in the normal state, the signaling processors 1050, 1051 of the communication node shown in Fig. 10 terminating the light wave path switch the desired ADM's 1020 to 1023 to the filtering state when receiving the path switching request information. By this operation, the stop of use of the ET light wave path and the setting of the standby light wave path are performed. After that, the signaling processors 1050, 1051 of the communication node shown in Fig. 10 receive the path switching request response information, and in the case where the ET light wave path to be the object and the finally determined standby light wave path do not share the network resource, they switch the desired ADM's 1020 to 1023 to restart the use of the ET light wave path.

By making the communication node have the constitution, the obstacle restoration in the first embodiment can be implemented.

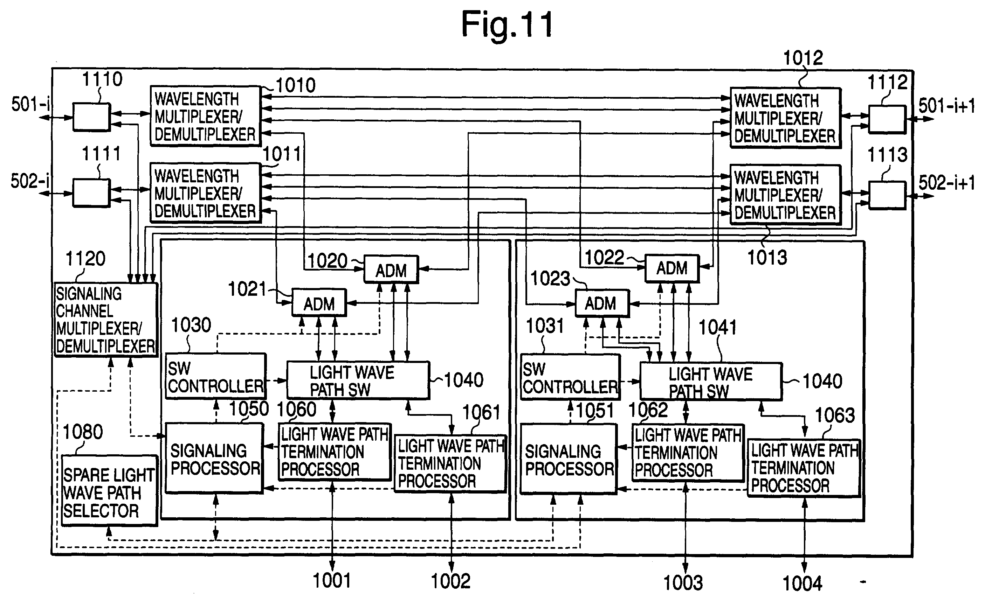

In Fig. 11, another example of the constitution of the communication nodes 510, 520, 530, 540, 550 used in the first embodiment is shown. The WDM light network to which the communication node shown in Fig. 11 is applied is configured from five wavelengths. The communication node shown in Fig. 11 uses four wavelengths for the data transfer light wave path and one wavelength for the signaling path transfer light wave path made by multiplexing the signaling channel. The communication node shown in Fig. 11 does not multiplex the signaling channel to the main signal data transfer light wave path, and transfers it by another light wave path.

The communication node shown in Fig. 11 is configured such that signaling path multiplexing separators 1110 to 1113 and a signaling channel multiplexing separator 1120 are newly added to the communication node shown in Fig. 10 and the signaling multiplexing separators 1070 to 1073 are eliminated from the communication node shown in Fig. 10. Only the difference from the communication node shown in Fig. 10 will be described below.

The signaling path multiplexers/demultiplexers 1110 to 1113 separate the WDM signals from the input-output ports 501, 502 into the signaling path transfer light wave path and the data transfer light wave path, and they transfer the signaling path transfer light wave path to the signaling channel multiplexer/demultiplexer separator 1120, and transfer the data transfer light wave path to the wavelength multiplexers/demultiplexers 1010 to 1013. Furthermore, the signaling path multiplexers/demultiplexers 1110 to 1113 multiplex the signaling path transfer light wave path from the signaling channel multiplexing separator 1120 and the data transfer light wave path from the wavelength multiplexing separators 1010 to 1013, and transfer them to the input-output ports 501, 502.

The signaling channel multiplexer/demultiplexer 1120 separates the signaling paths from the signaling path multiplexers/demultiplexers 1110 to 1113 into signaling channels, and transfers the signaling channel of the wavelength group to be terminated to the signaling processors 1050, 1051. The signaling channel of the wavelength group not to be terminated and the signaling channel from the signaling processors 1050, 1051 are multiplexed to form the signaling path, and it is converted into the light wave path to be transferred to the signaling path multiplexers/demultiplexers 1110 to 1113.

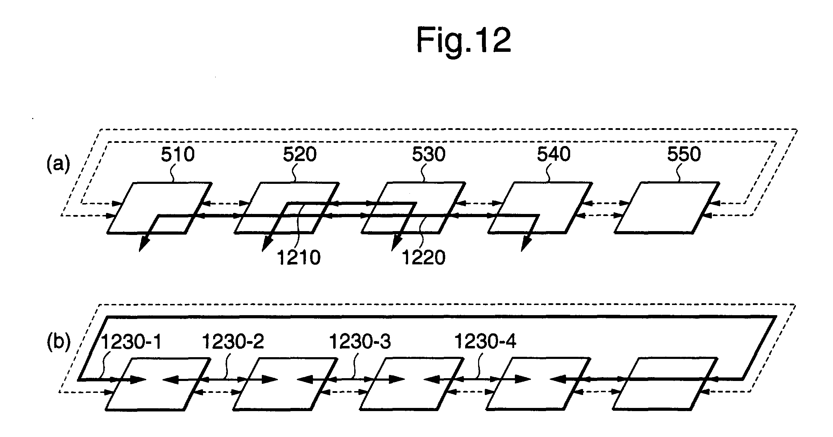

In the communication node shown in Fig. 11, the signaling transfer is performed by a light wave path different from the data transfer light wave path. Therefore, in the network shown in Fig. 12 (a), even in the case where the light wave paths 1210, 1220 of the same wavelength group are respectively set between the communication nodes 520, 530 on the two-way fiber 501 and between the communication nodes 520, 530 on the two-way fiber 502, that is, even in the case where the setting sections of the light wave paths of the same wavelength group are partly overlapped, it is possible to exchange the path switching information of the wavelength group between the communication nodes 510, 520, 530, 540 by setting the signaling channels 1230-1 to 1230-4 as shown in Fig. 12(b). As a result of that, in the case of a communication node shown in Fig. 10, when multiplexing the signaling channel to the light wave path, the fellow light wave paths of the same wavelength group can be set only in the same section or in the completely different sections, but in the case of a communication node shown in Fig. 11, this limitation is eliminated, so that the light wave path may flexibly be set.

As mentioned above, in the case of a communication node shown in Fig. 11, the obstacle restoration in the first embodiment can be implemented, and in the meantime, by separating the signaling transfer light wave path and the data transfer light wave path, the setting of the light wave path of the WDM light network can more flexibly be performed than that in the case of the communication node shown in Fig. 10.

### (Second embodiment)

Next, a second embodiment of the present invention will be described by referring to Fig. 5, Fig. 13 to Fig. 16.

The WDM light network shown in Fig. 5 is a physical/light wave path network for describing an embodiment of the present invention. The communication nodes 510, 520, 530, 540, 550 have the light wave path testing function in addition to the functions described in the Embodiment 1.

The present embodiment comprises the processes of a first step of setting a standby light wave path (hereafter, referred to as a first standby light wave path) by using the obstacle restoration system described as the first embodiment, and a second step of setting an optimum standby light wave path (hereafter, referred to as an optimum standby light wave path) considering the network efficiency or the like and of switching the path from the first standby light wave path to the optimum standby light wave path.

That is, it is an obstacle restoration system which is applied in the case where the first standby light wave path whose obstacle is restored is not necessarily optimum.

As shown in Fig. 5 (c), in the case where a fiber obstacle has occurred in the two-way fiber 501-3 between the communication nodes 520, 530, the switching from the working light wave paths 561-N, 571-N receiving obstacles of the first step to the first standby light wave paths 561-R, 571-R is performed following the procedures completely identical with those of the obstacle restoration information exchanging sequences respectively shown in Fig. 6 and Fig. 8 and the path switching action described as the first embodiment.

After that, in the case where the first standby light wave paths 561-R, 571-R are not optimum as a result of considering the network efficiency, the standby light wave path optimization of the second step is performed. The optimum standby light wave path is selected on the basis of the number of hops, efficient use of the network, transmitting distance, the number of ET light wave paths to be cut or the like. The setting and test of the optimum standby light wave path of this second step are performed by using the signaling processing function and the path testing function.

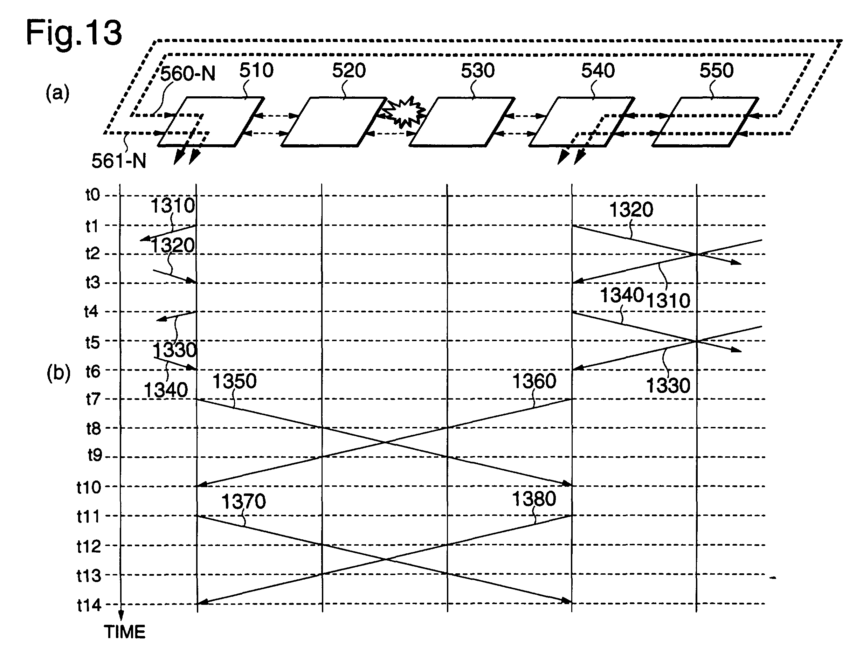

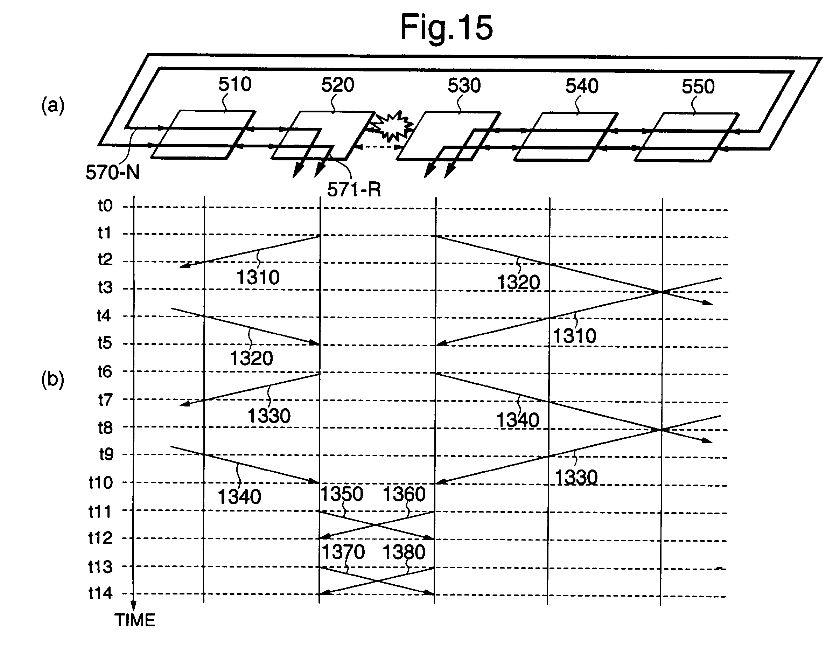

Fig. 13 and Fig. 15 respectively show the standby light wave path optimization information exchanging sequences of the second step of the wavelength group of a wavelength of λi and of the wavelength group of a wavelength of λj. This standby light wave path optimization information exchanging sequence is also performed in parallel for each wavelength group similarly to the first step.

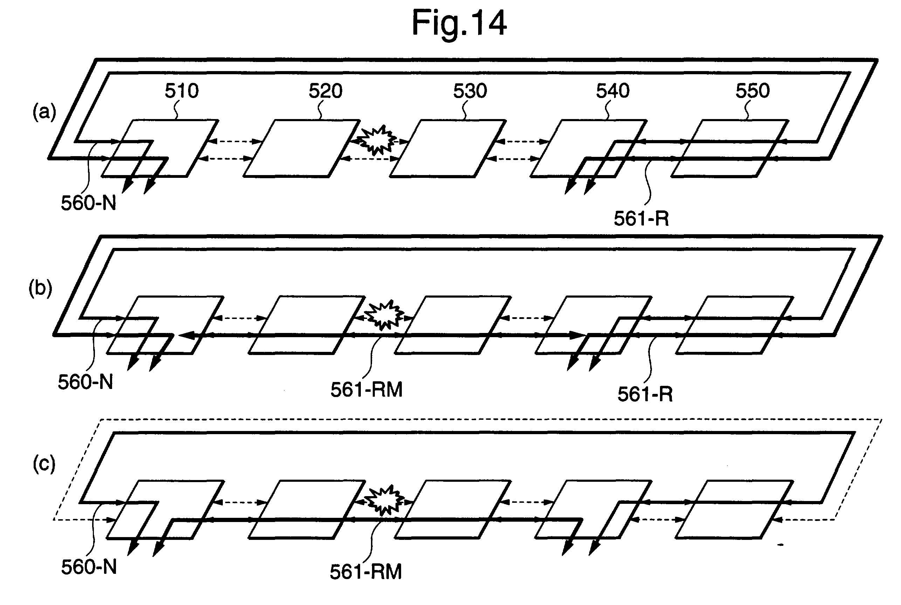

By referring to Fig. 13 and Fig. 14, the standby light wave path optimization information exchanging sequence of the second step of the wavelength group of a wavelength of λi and the action thereof will be described. At the time t0, after the finish of the obstacle restoration of the first step, the communication nodes 510, 540 determine the optimum standby light wave path. At the time t1, they mutually send out the optimum standby light wave path setting request informations 1310, 1320 including the optimum standby light wave path. At the time t3, the communication nodes 510, 540 receiving the optimum standby light wave path setting request informations 1320, 1310 set the optimum standby light wave path. At the time t4, they mutually send out the optimum standby light wave path setting response informations 1330, 1340.

At the time t6, the communication nodes 510, 540 receiving the optimum standby light wave path setting response informations 1340, 1330 mutually transmit and receive the test signals by using the optimum standby light wave path to perform the tests. The communication nodes 510, 540 notify each other of the test results at the time t7 as the standby light wave path test result informations 1350, 1360.

The communication nodes 510, 540 receiving the standby light wave path test result informations 1360, 1350 at the time t10 mutually send out the standby light wave path test result response informations 1370, 1380 at the time t11. The communication nodes 510, 540 switch the path from the first standby light wave path to the optimum standby light wave path when judging that the optimum spare light wave path can be used, on the basis of the standby light wave path test result response informations 1380, 1370 received at the time t14.

After that, the communication nodes 510, 540 release the first standby light wave path through the standby light wave path cutting request/response. Furthermore, the communication nodes 510, 540 receive the standby light wave path test result response informations 1370, 1380, and as a result of that, in the case where the optimum standby light wave path cannot be used, they release this optimum standby light wave path.

Fig. 14 shows the light wave path network of the wavelength group of a wavelength of λi. Fig. 14(a) is the light wave path network after the finish of the first step, that is, at the time t0, and the first standby light wave path 561-R using the two-way fiber 502 is set in the ring direction.

Fig. 14(b) is the light wave path network between the time t10 and the time t11, and the optimum standby light wave path 561-RM is set on the two-way fiber 502 in the span direction, in addition to the first standby light wave path 561-R. However, at this moment, the test signals are allowed to flow in the optimum standby light wave path 561-RM, and the data signals to be transferred are transferred by using the first standby light wave path 561-R.

Fig. 14 (c) is the light wave path network at the time t14 and afterward, and the first standby light wave path 561-R in the ring direction between the communication nodes 510, 540 is released, and only the optimum standby light wave path 561-RM in the span direction is set.

The standby light wave path optimization information exchanging sequence of the second step of the wavelength group of a wavelength of λj shown in Fig. 15 is identical with that of the wavelength group of a wavelength of λi. However, the standby light wave path optimization information exchanging sequence is performed between the communication nodes 520, 530.

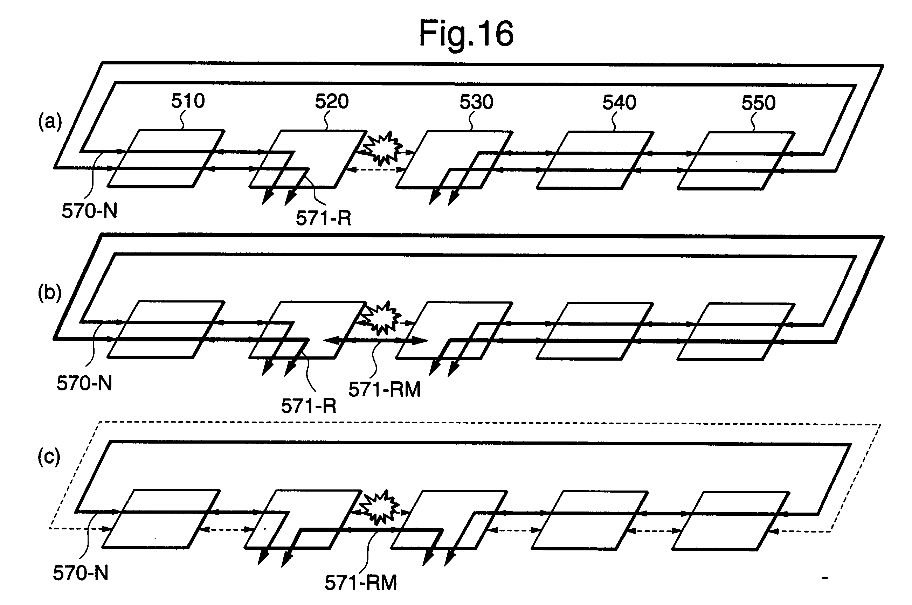

Fig. 16 shows the light wave path network of the wavelength group of a wavelength of λj. Fig. 16(a) is the light wave path network after the finish of the first step, that is, at the time t0, and the first standby light wave path 571-R using the two-way fiber 502 is set in the ring direction.

Fig. 16(b) is the light wave path network between the time t10 and the time t11, and the optimum standby light wave path 571-RM is set on the two-way fiber 502 in the span direction in addition to the first standby light wave path 571-R. However, at this moment, the test signals are allowed to flow in the optimum standby light wave path 571-RM, and the data signals to be transferred are transferred by using the first spare light wave path 571-R.

Fig. 16(c) is the light wave path network at the time t14 and afterward, and the first standby light wave path 571-R in the ring direction between the communication nodes 520, 530 is released, and the optimum standby light wave path 571-RM in the span direction is set.

In the present embodiment configured as mentioned above, before setting the optimum standby light wave path, the ET light wave path is configured by using the network resource thereof, so that an additional or auxiliary signal can be transferred. When setting the optimum standby light wave path, in the case where the ET light wave path uses part of or all of the network resource thereof, the optimum standby light wave path switching request/response information is told also to the terminating communication node of the ET light wave path. The terminating communication node of the ET light wave path stops the use of the ET light wave path when receiving the optimum spare light wave path switching request information. After that, in the case where receiving the optimum light wave path switching request response information and using the optimum standby light wave path, the setting thereof is performed. On the other hand, in the case where the optimum spare light wave path is not used, the use of the ET light wave path can be restarted.

Furthermore, in the case where the first standby light wave path is released through the standby light wave path cutting request/response information, the use of the ET light wave path can also be restarted by notifying the communication nodes of both ends setting the ET light wave path by using part of or all of the network resource at the normal time, of the information.

As mentioned above, after the first step of switching the path from the current light wave path receiving an obstacle to the standby light wave path, the second step of setting the optimum standby light wave path and of switching the path to the optimum standby light wave path through the test is performed, so that the obstacle restoration with a high network efficiency can be performed.

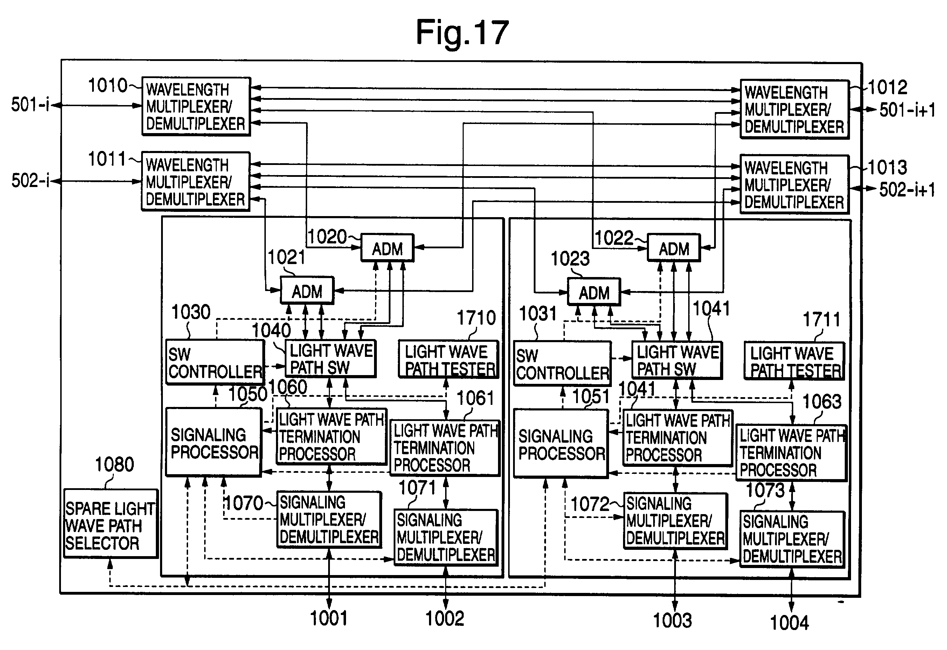

Fig. 17 is a drawing showing the constitution of the communication nodes 510, 520, 530, 540, 550 for performing the obstacle restoration in the second embodiment of the present invention. By the way, the WDM transmission network to which the communication node of Fig. 17 is applied comprises four wavelengths. In the case of the communication node shown in Fig. 17, the signaling channel is multiplexed to the light wave path together with the main signal data.

The communication node shown in Fig. 17 is configured in such a way that light wave path testers 1710, 1711 are newly added to the communication node shown in Fig. 10. Only the difference from the communication node shown in Fig. 10 will be described below, and the description of the same parts will be omitted.

The light wave path testers 1710, 1711 are arranged for each wavelength group, and they are respectively connected to the light wave path SW's 1040, 1041. The light wave path testers 1710, 1711 inspect the state of the optimum standby light wave path thereof by transmitting and receiving the test signals by using the optimum spare light wave path set by the control of the signaling processors 1050, 1051. Furthermore, they notify the signaling processors 1050, 1051 of the result. The test of the optimum standby light wave path is performed by the light wave path testers 1710, 1711.

The signaling processors 1050, 1051 control the processing of the obstacle restoration information exchanging sequence in the first step and of the optimum standby light wave path setting information exchanging sequence in the second step, and the light wave path SW's 1040, 1041 and the ADM's 1020 to 1023, and they perform the switching control of the light wave path. Since these sequences are as described in each embodiment, the description will be omitted here. The signaling processors 1050, 1051 and light wave path testers 1710, 1711 which are newly added functions will mainly be described.

After the finish of the obstacle restoration of the first step, the signaling processors 1050, 1051 issue the retrieving request of the optimum standby light wave path of the light wave path with an obstacle to the standby light wave path selector 1080.

The standby light wave path selector 1080 selects a path by which the network can efficiently be used, and notifies the signaling processors 1050, 1051. After that, in the case where the first standby light wave path is not the optimum standby light wave path, the signaling processors 1050, 1051 prepare the optimum standby light wave path setting request information, and transfer it to the desired signaling multiplexing separators 1070 to 1073. Furthermore, in the case where an optimum standby light wave path setting request information or an optimum standby light wave path setting response information is received and the optimum standby light wave path can be set, they control the light wave path SW's 1040, 1041 and the ADM's 1020 to 1023, and set the optimum standby light wave path. Furthermore, in the case where the optimum standby light wave path setting request information is received, they transfer the optimum standby light wave path setting request response information to the desired signaling multiplexers/demultiplexers 1070 to 1073.

When the connection of the optimum standby light wave path has finished, the signaling processors 1050, 1051 send out a path testing request to the light wave path testers 1710, 1711. The light wave path testers 1710, 1711 watch the path state by transmitting and receiving the test signals by using the optimum standby light wave path. After that, the light wave path testers 1710, 1711 judge whether the optimum standby light wave path can be used or not, and notify the signaling processors 1050, 1051 of the result. On the basis of this, the signaling processors 1050, 1051 transfer the information of the test result of the optimum standby light wave path to the desired signaling multiplexers/demultiplexers 1070 to 1073.

Furthermore, the signaling processors 1050, 1051 receive the test result response information of the optimum standby light wave path, and when the optimum standby light wave path can be used, they control the light wave path SW's 1040, 1041 and the ADM'S 1020 to 1023 through the SW controllers 1030, 1031, and switch the communication passage from the first standby light wave path to the optimum standby light wave path.

After that, the signaling processors 1050, 1051 control the light wave path SW's 1040, 1041 and the ADM's 1020 to 1023 through the SW controllers 1030, 1031, and release the first standby light wave path through the path cutting request/response information, so that the setting may be restored to a setting at the normal time.

On the other hand, when the optimum standby light wave path cannot be used, the signaling processors 1050, 1051 release the optimum standby light wave path similarly to the time of releasing of the first standby light wave path, and restore the setting to a setting at the normal time. By restoring the network resource of the released first standby light wave path or optimum standby light wave path to the setting at the normal time, it is possible to restart the use of the ET light wave path which has stopped.

According to the constitution of the device, the obstacle restoration of the second step in the second embodiment can be implemented.

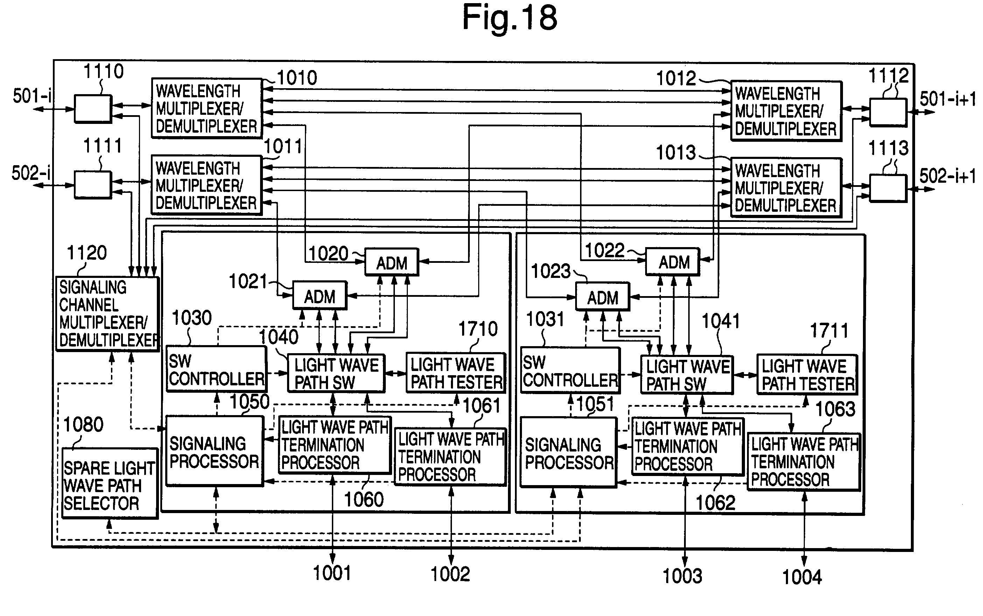

In Fig. 18, another example of the constitution of the communication nodes 510, 520, 530, 540, 550 used in the second embodiment is shown. By the way, the WDM light network to which the communication node shown in Fig. 18 is applied comprises five wavelengths. The communication node shown in Fig. 18 uses four wavelengths for the data transfer light wave path and one wavelength for the signaling path transfer light wave path made by multiplexing the signaling channel. The communication node shown in Fig. 18 does not multiplex the signaling channel to the main signal data light wave path, and transfers it by another light wave path.

The communication node shown in Fig. 18 is configured in such a way that signaling path multiplexers/demultiplexers 1110 to 1113 and a signaling channel multiplexer/demultiplexer 1120 are newly added to the communication node shown in Fig. 17 and the signaling multiplexers/demultiplexers 1070 to 1073 are eliminated. The action of the signaling path multiplexers/demultiplexers 1110 to 1113 and the signaling channel multiplexer/demultiplexer 1120 is similar to that shown in Fig. 7, and the action of the common parts with the communication node shown in Fig. 17 is also similar, and therefore, the description will be omitted.

In the case of the communication node shown in Fig. 18, the signaling transfer is performed by a light wave path independent from the data path light wave path. In the network shown in Fig. 12(a) having the same constitution as Fig. 5(a), even in the case where the light wave paths 1210, 1220 of the same wavelength group are respectively set between the communication nodes 520, 530 on the two-way fiber 501 and between the communication nodes 520, 530 on the two-way fiber 502, that is, even in the case where the setting sections of the light wave paths of the same wavelength group are partly overlapped, it is possible to exchange the path switching information of the wavelength group among the communication nodes 510, 520, 530, 540 by setting the signaling channels 1230-1 to 1230-4 as shown in Fig. 12(b).

As a result of that, in the case where the signaling channel is multiplexed to the light wave path, the fellow light wave paths of the same wavelength group can be set only in the same section or in the completely different sections, but in the case of a communication node shown in Fig. 18, this limitation is eliminated, so that the light wave path may flexibly be set.

According to the constitution of the device, the obstacle restoration by the second step which is the obstacle restoration system of the second invention can be implemented, and in the meantime, by separating the signaling transfer light wave path and the data transfer light wave path, the setting of the light wave path of the WDM transmission network can flexibly be performed.

### (Third embodiment)

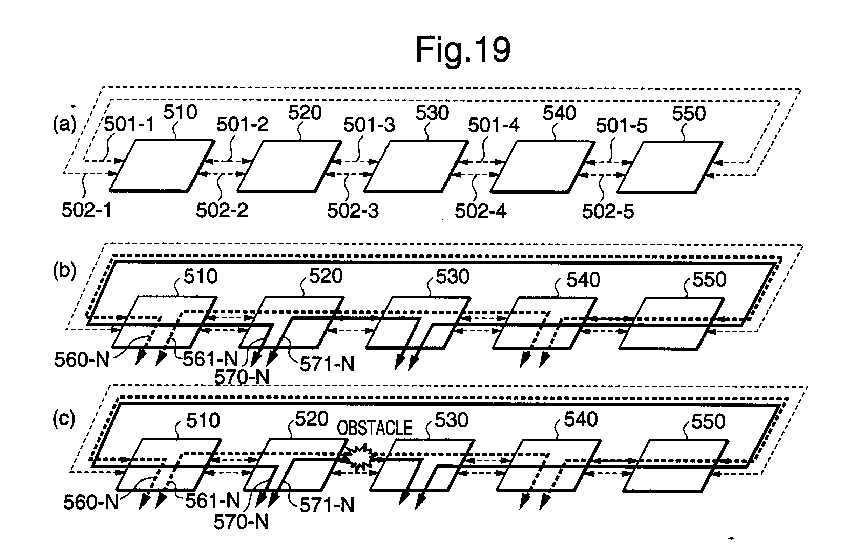

By referring to Fig. 19 to Fig. 23, the obstacle restoration method according to a third embodiment of the present invention will be described. Fig. 19 shows a WDM transmission network using the communication nodes 510, 520, 530, 540, 550. Fig. 19(a) is a physical network connection diagram, and Fig. 19(b) shows a network of the light wave path (hereafter, referred to as a working light wave path) used at the normal time and using the wavelengths λi, λj.

As shown in Fig. 19(a), the communication nodes 510, 520, 530, 540, 550 are circularly connected by using the two-way fibers 501-1 to 501-5 (hereafter, referred to simply as 501) and 502-1 to 502-5 (hereafter, referred to simply as 502). On the physical transmission network shown in Fig. 19(a), as shown in Fig. 19(b), a total of four pieces of working light wave paths are set, which are a working light wave path 560-N of a wavelength of λi set between the communication node 510 and the communication node 540 through the communication node 550, a working light wave path 561-N of a wavelength of λi set between the communication node 510 and the communication node 540 through the communication nodes 520, 530, a working light wave path 570-N of a wavelength of λj set between the communication node 520 and the communication node 530 through the communication nodes 510, 550, 540, and a working light wave path 571-N of a wavelength of λj set between the communication node 520 and the communication node 530. Here, the light wave path of a wavelength of λj is shown by a bold solid line, and the light wave path of a wavelength of λi is shown by a bold broken line. All working light wave paths 560-N, 561-N, 570-N, 571-N are set by using two-way fibers 501.

To each of the current light wave paths 560-N, 561-N, 570-N, 571-N, the light wave paths used as detours at the time of an obstacle (hereafter, referred to as standby light wave paths) are prepared in the span direction (the same direction as the current light wave path) and the ring direction (opposite direction of the working light wave path) on the two-way fiber 502. However, at this moment, the standby light wave path is not set. In this example, the wavelengths of the working light wave paths 560-N, 561-N and the standby light wave paths for them are the same wavelength of λi, and the wavelengths of the working light wave paths 570-N, 571-N and the standby light wave paths for them are the same wavelength of λj.

Here, the wavelengths of the working light wave paths and the standby light wave paths for them are the same wavelength, but the wavelengths thereof may be different. Furthermore, for constituting one light wave path, the physical wavelengths used between the respective physical rings on the passage of the light wave path are made a single wavelength, but this may also be a combination of different wavelengths. That is, it is sufficient that the wavelength resource is independently allocated to each of the current light wave path and the standby light wave path. Considering these, a group of wavelengths comprising a wavelength of the current light wave path and a wavelength of the standby light wave path thereof is defined as a wavelength group, and it is used below. An example shown here corresponds to a case where the number of wavelength groups is two and the number of wavelengths constituting each wavelength group is 1.

The detail of the constitution of the communication nodes 510, 520, 530, 540, 550 will be described later. Each communication node is a wavelength division multiplexing communication node, and it has the light wave path termination processing function of detecting an obstacle of a light wave path terminated by the own communication node, the selector/bridge function of selecting one from among a plurality of standby light wave paths transferring the same data signal and of transferring the same data signal to a plurality of standby light wave paths, the light wave path switching function of switching the light wave paths, and the signaling processing function of performing the exchange of the light wave path control information. The signaling processing function is prepared for each wavelength group, and each of the communication nodes 510, 520, 530, 540, 550 has at least the signaling processing function of the wavelength group of the light wave path terminated in the own communication node. The signaling channel transferring the light wave path control information is set between the adjacent communication nodes having the same wavelength group for each two-way fiber.

The case where a fiber obstacle has occurred in the two-way fiber 501-3 between the communication node 520 and the communication node 530 as shown in Fig. 19 (c) will be described below.

Because of this obstacle, an obstacle occurs in the working light wave paths 561-N, 571-N going through the two-way fiber 501-3, and the obstacle is detected by using the light wave path termination processing function of the communication nodes 510, 540 and 520, 530 of both ends of the working light wave paths 561-N and 571-N. The communication nodes 510, 520, 530, 540 detecting an obstacle start the obstacle restoration process. The obstacle restoration process is performed for each wavelength group.

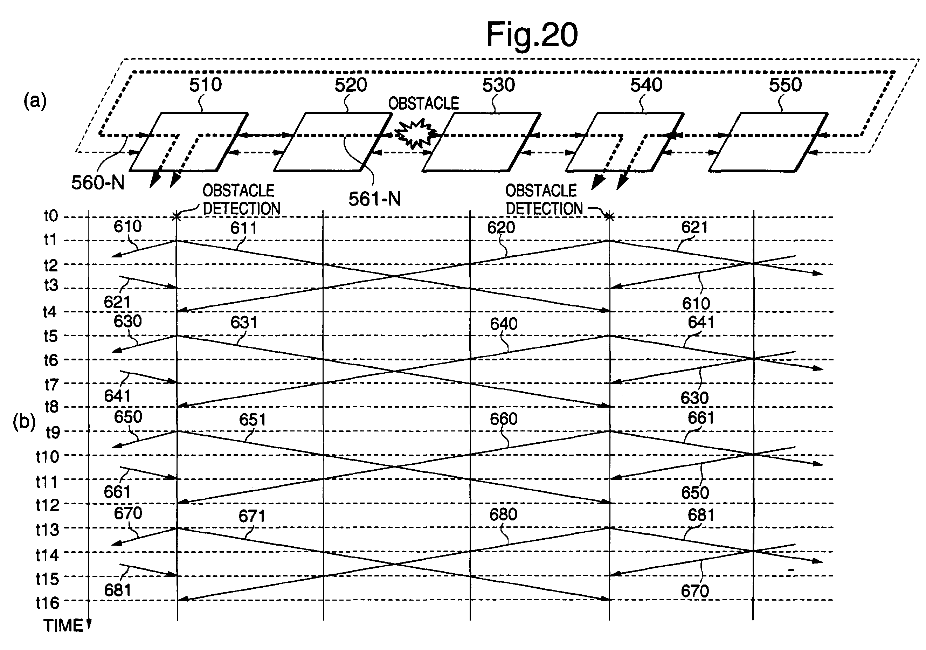

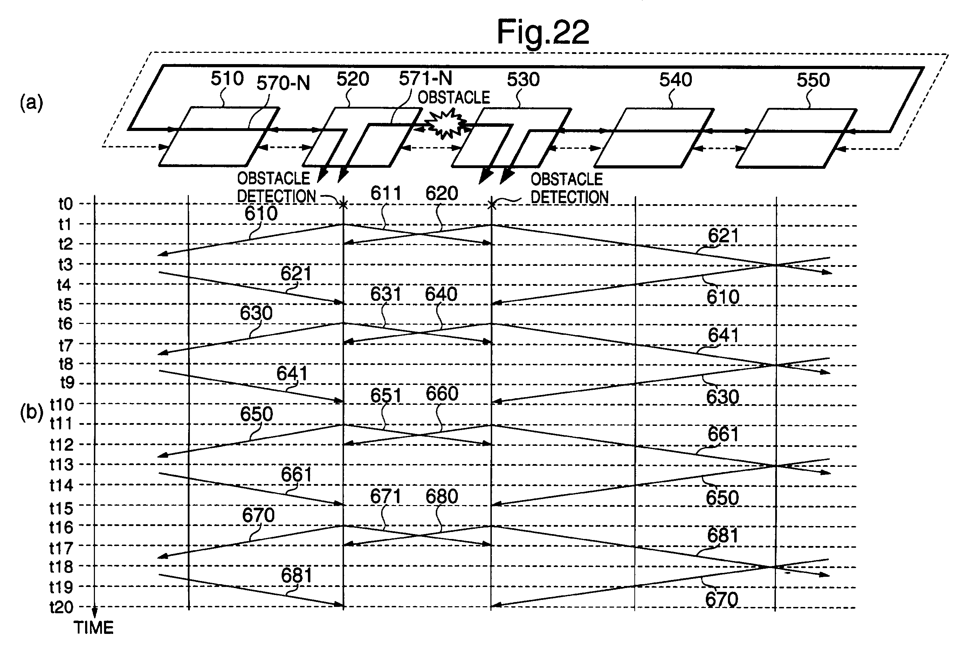

The obstacle restoration information exchanging sequence is shown in Fig. 20 and Fig. 22. Fig. 20 is the obstacle restoration information exchanging sequence of the wavelength group of a wavelength of λi, and Fig. 22 is the obstacle restoration information exchanging sequence of the wavelength group of a wavelength of λj. The obstacle restoration information exchanging sequences of the respective wavelength groups are independent and are performed in parallel. By the way, the obstacle restoration information exchange is performed by using each signaling processing function between the communication nodes where the light wave paths of the same wavelength group are terminated. The description of the signaling processing function will be omitted below for simplifying the description. Furthermore, in this example, there are two pieces of standby light wave paths in the span direction and in the ring direction for a working light wave path with an obstacle.

First, the obstacle restoration information exchanging sequence of the wavelength group of a wavelength of λi in Fig. 20 and the path switching action will be described.

The communication nodes 510 and 540 detect an obstacle at the time t0. At the time t1, the communication nodes 510 and 540 select one or a plurality of usable standby light wave path candidates according to the state of use of the network resource. Together with this, they respectively send out the standby light wave path setting request informations 610, 611 and 620, 621 including the standby light wave path candidate information thereof toward each other, into the passages of the standby light wave path to be the candidate (in this example, the passages of the standby light wave path in the span direction and in the ring direction).

As a result of that, the communication nodes 510, 540 respectively receive the standby light wave path setting request informations 621, 610 from the ring direction at the time t3. At the time t4, they respectively receive the standby light wave path setting request informations 620, 611 from the span direction. The communication nodes 510 and 540 respectively receiving the standby light wave path setting request informations 620, 621 and 610, 611 extract the candidates of the standby light wave path included in the standby light wave path setting request information, and by using the respective light wave path switching functions and light wave path termination processing functions, they set the data transmitted by the standby light wave path to the receivable state. In this example, the communication nodes 510, 540 set the data transferred by using two pieces of standby light wave paths in the ring direction and in the span direction to the receivable state.

After that, at the time t5, the communication nodes 510, 540 mutually transfer the standby light wave path setting response informations 630, 631 and 640, 641 including the standby light wave path setting result. At the time t7, the communication nodes 510, 540 respectively receive the standby light wave path setting response informations 641, 630. At the time t8, the communication nodes 510, 540 receive the standby light wave path setting response informations 640, 631, and confirm the setting on the reception side of the standby light wave path candidates between the communication nodes 510, 540. After that, the communication nodes 510, 540 bridge the data to be transferred by using the selector/bridge function, and transfer the data to the respective standby light wave path candidates. According to the action, at the time t8, the two-way standby light wave paths are set both in the ring direction and in the span direction. The communication nodes 510, 540 monitor the state of the set standby light wave path candidates by using the light wave path termination processing function, and select one or a plurality of usable standby light wave paths among them.

Next, at the time t9, the communication nodes 510, 540 respectively transfer the standby light wave path selection result informations 650, 651 and 660, 661 to each other. The communication nodes 510, 540 receiving those informations at the time t11 and the time t12 compare the standby light wave path candidate selected by the own communication node and the standby light wave path candidate selected by the opposite communication node, and they identically determine the standby light wave path according to the same standby light wave path determining process. After that, by using the selector/bridge function, they connect only one piece of determined standby light wave path. After that, at the time t13, the communication nodes 510, 540 mutually transfer the standby light wave path selection result response informations 670, 671 and 680, 681. At the time t15, the communication nodes 510, 540 receive the standby light wave path selection result response informations 681, 670, and at the time t16, they receive the standby light wave path selection result response informations 680, 671, and the obstacle restoration process finishes. The setting of the standby light wave path candidates which have been selected for the candidate but have not been determined is released at the point when the standby light wave path selection result informations 650, 651, 660, 661 are received and the standby light wave path is identically determined and the standby light wave path is set by using the selector/bridge function, or at the point when the standby light wave path selection response informations 670, 671, 680, 681 are received. At this moment, the network resource of these standby light wave path candidates can be restored to the setting before the time t0.

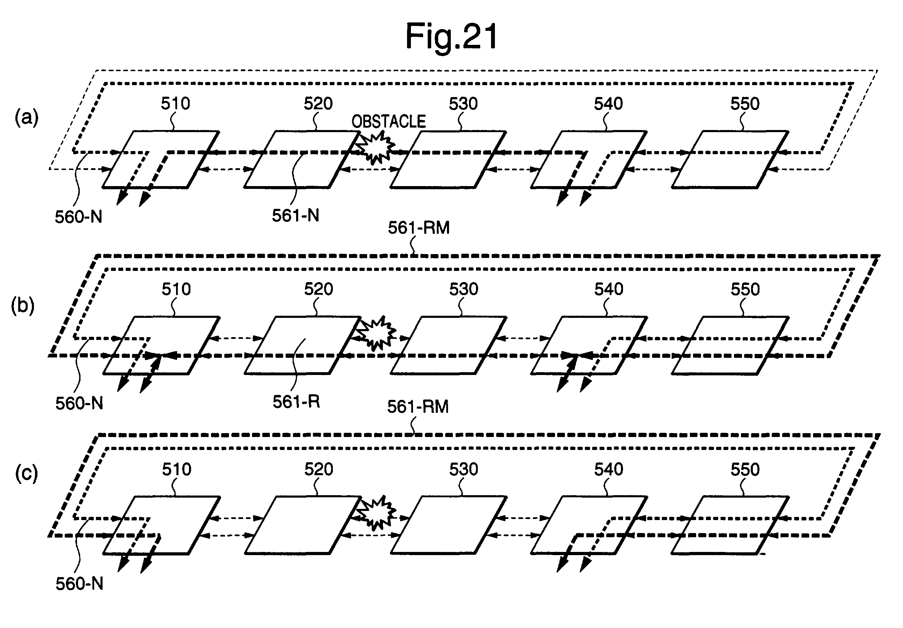

Fig. 21 shows the change of the light wave path network from the occurrence of an obstacle to the obstacle restoration of the wavelength group of a wavelength of λi in the working light wave path 561-N. Fig. 21 (a) shows the light wave path network at the time t0, and Fig. 21 (b) shows the light wave path network at the time t8 to the time t12, and Fig. 21 (c) shows the light wave path network at the time t16 and afterward. In this example, finally, the standby light wave path 561-RM in the ring direction is determined. As shown in Fig. 21 (b), at the time t8 to the time t12, the standby light wave paths 561-RM, 561-R are respectively set in the ring direction and in the span direction. Furthermore, at the time t16 when the standby light wave path 561-RM in the ring direction is determined and afterward, the standby light wave path 561-R in the span direction is released as shown in Fig. 21 (c).

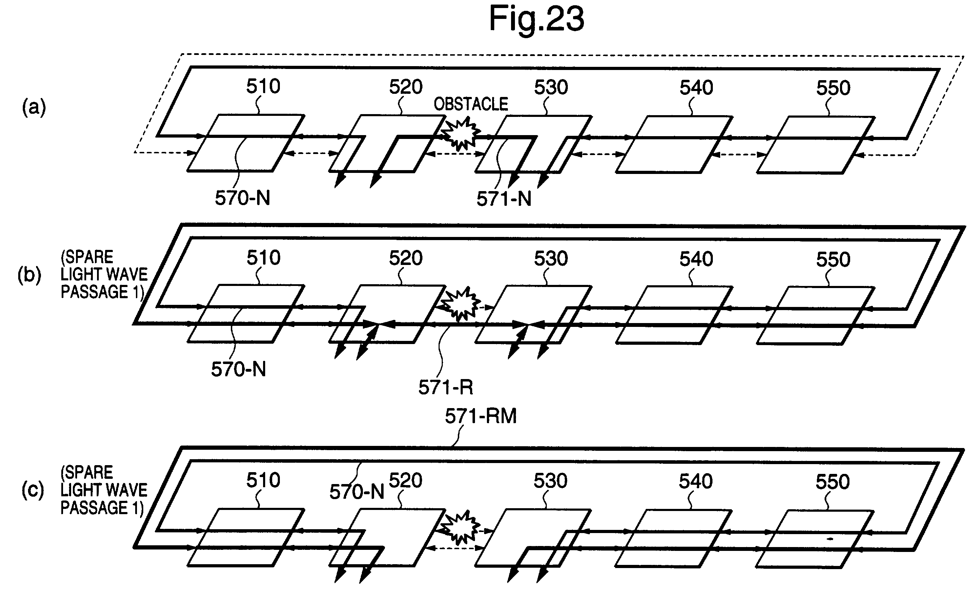

Fig. 22 shows the obstacle restoration information exchanging sequence of the wavelength group of a wavelength of λj and the path switching action. The obstacle restoration information exchanging sequence of the wavelength group of a wavelength of λj and the path switching action are similar to those in the wavelength group of a wavelength of λi shown in Fig. 20, but they are different in that the communication nodes which exchange the spare light wave path setting request informations 610, 611, 620, 621 and the response informations thereof 630, 631, 640, 641, and the standby light wave path selection result informations 650, 651, 660, 661 and the response informations thereof 670, 671, 680, 681 are the communication nodes 520, 530. Fig. 23 shows the change of the light wave path network from the occurrence of an obstacle to the obstacle restoration of the wavelength group of a wavelength of λj in the working light wave path 571-N. Here, finally, the standby light wave path 571-RM in the ring direction is determined. Fig. 23 (a) shows the state of the light wave path network at the time t0 in Fig. 22, and Fig. 23(b) shows the state of the light wave path network at the time t10 to the time t15 in Fig. 22, and Fig. 23(c) shows the state of the light wave path network at the time t20 and afterward in Fig. 22. As shown in Fig. 23(b), at the time t10 to the time t15, two pieces of standby light wave paths 571-RM, 571-R in the ring direction and in the span direction are set, and at the time t20 when the standby light wave path 571-RM in the ring direction is determined and afterward, the standby light wave path 571-R in the span direction is released as shown in Fig. 23 (c).

The standby light wave path setting request informations 610, 611, 620, 621 maybe transferred, respectively including therein only the information of the standby light wave path candidates whose passages are identical with the transfer passages, and they may also respectively be transferred, including all standby light wave path candidates. Furthermore, in the case of transmitting the standby light wave path setting response informations 630, 631, 640, 641, similarly, they may be transferred, respectively including therein the setting states of the standby light wave path candidates whose passages are identical with the transfer passages, and they may also respectively be transferred, including the setting states of all standby light wave path candidates.

In the case where the standby light wave path setting request informations 610, 611, 620, 621 and the spare light wave path setting response informations 630, 631, 640, 641 are transferred including therein the information of each of the standby light wave path candidates whose passages are identical with the transfer passages, at the time of a one-way fiber obstacle, the standby light wave path setting response informations 630, 631, 640, 641 are not received even when the standby light wave path setting request informations 610, 611, 620, 621 are sent out. Therefore, in the case where the standby light wave path setting response informations 630, 631, 640, 641 cannot be received within a certain time after the output of the standby light wave path setting request informations 610, 611, 620, 621, it is necessary to remove the standby light wave path from the candidates.

Similarly, the standby light wave path selection result informations 660, 661, 670, 671 may be transferred, respectively including therein only the information related to the standby light wave path candidates whose passages are identical with the transfer passages, and they may also respectively be transferred, including the information related to all standby light wave path candidates. Furthermore, it is not always necessary to narrow down the determinable standby light wave path candidates told by the standby light wave path selection result informations 660, 661, 670, 671 to 1 piece. In the case of including a plurality of determinable standby light wave paths, each communication node which switches the path from the current light wave path to the standby light wave path identically determines the standby light wave path according to the same standby light wave path determining process after the reception of the standby light wave path selection result informations 660, 661, 670, 671.

According to the obstacle restoration method described in the present embodiment, in the case where an obstacle has been detected, or in the case where a plurality of standby light wave path candidates are set for the current light wave path receiving an obstacle, or in the case where the standby light wave path candidate information determined by the own communication node and the standby light wave path candidate information determined by the opposite communication node are overlapped in a plurality of cases, it is necessary to select a proper standby light wave path candidate from among a plurality of candidates. This standby light wave path is selected on the basis of the number of hops, transmitting distance, efficiency of use of a network or the like. Furthermore, in the case where the same data is transmitted and received by using a plurality of standby light wave paths, it can also be the selection factor that the error rate of the light wave path signal is equal to or less than the reference value.

When the communication node detecting an obstacle of the working light wave path selects one or a plurality of standby light wave path candidates, in the case where there are communication nodes respectively setting light wave paths (hereafter, referred to as ET light wave paths) for the additional or auxiliary data transfer by using part of or all of the network resources of the standby light wave path candidates, or terminating communication nodes of other current light wave paths capable of setting the standby light wave path by using part of or all of the same network resources as the standby light wave path candidates, the communication node terminating the current light wave path receiving an obstacle also notify those communication nodes of the standby light wave path setting request information, the standby light wave path setting response information, the standby light wave path selection result information, and the standby light wave path selection result response information.

When receiving the standby light wave path setting request information, the ET light wave path terminating communication node terminating the ET light wave path cuts the ET light wave path and sets the standby light wave path. Furthermore, the ET light wave path terminating communication node releases the paths other than the determined standby light wave path told by the standby light wave path selection result response information, and it can restore only the light wave paths using no network resource of the determined standby light wave path to the setting before the time t0.

The communication node terminating another current light wave path using part of or all of the network resources of the selected standby light wave path as the standby light wave path omits the standby light wave path which shares the network resources with the standby light wave path candidate selected from among the standby light wave path candidates of the working light wave path, when receiving the standby light wave path setting request information. When the standby light wave path is determined, the communication node adds the omitted standby light wave path as a candidate, as for the paths other than the determined standby light wave path.

Even when receiving the spare light wave path control information, the ET light wave path terminating communication node and the communication node which terminates another working light wave path using part of or all of the network resources of the selected spare light wave path as the standby light wave path do not rewrite the information, but transfer the information to the communication node where the information is terminated.

Furthermore, in the present embodiment, the switching from the working light wave path to the standby light wave path can also be implemented by the wavelength switching besides the physical passage switching. In this case, it is also possible that the wavelength group comprises a plurality of wavelengths and that the switched standby light wave path is physically the same passage as the working light wave path.

Thus, a wavelength group is formed from wavelengths of the working light wave path and the standby light wave path, and an obstacle is detected at the end of a light wave path, and the light wave path is switched for each wavelength group, and consequently, the obstacle restoration can independently be performed for each light wave path.

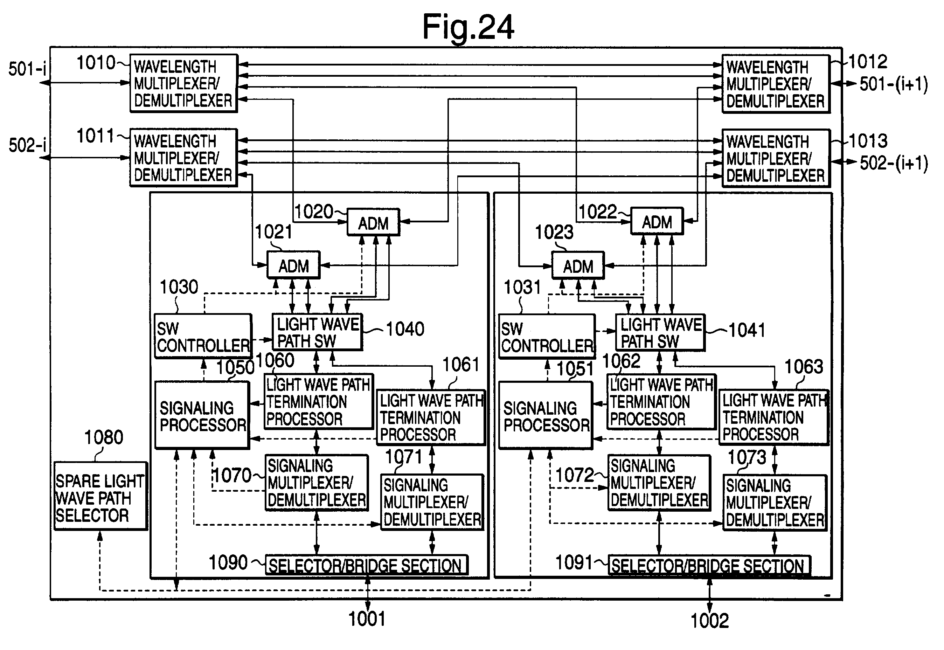

Next, the constitution of a communication node for performing the obstacle restoration method will be described. Fig. 24 is a block diagram showing one example of the constitution of a communication node to be used as the communication nodes 510, 520, 530, 540, 550 in the transmission network in Fig. 19. By the way, the WDM light transmission network to which the communication node shown in Fig. 24 is applied comprises four wavelengths. In this communication node, a data signal and a signaling channel is multiplexed to the light wave path. This example is an example in which light wave paths of two wavelength groups are terminated.

The communication node shown in Fig. 24 comprises wavelength multiplexers/demultiplexers 1010 to 1013, ADM's (add-drop multiplexers) 1020 to 1023, light wave path SW's 1040, 1041, light wave path termination processors 1060 to 1063, signaling multiplexers/demultiplexers 1070 to 1073, signaling processors 1050, 1051, SW controllers 1030, 1031, a standby light wave path selector 1080, a selector/bridge section 1090, and a selector/bridge section 1091.

The wavelength multiplexers/demultiplexers 1010 to 1013 perform the wavelength multiplexing and wavelength demultiplexing. The ADM's 1020, 1022 are connected to both the wavelength multiplexers/demultiplexers 1010, 1012 to perform the light branch coupling. The ADM's 1021, 1023 are connected to both the wavelength multiplexers/demultiplexers 1010, 1012. The light wave path SW 1040 is connected to the ADM's 1020, 1021. The light wave path SW 1041 is connected to the ADM's 1022, 1023. The light wave path termination processors 1060, 1061 are connected to the light wave path SW 1040 to perform the termination processing of the light wave path. The light wave path termination processors 1062, 1063 are connected to the light wave path SW 1041 to perform the termination processing of the light wave path. The signaling multiplexers/demultiplexers 1070 to 1073 are respectively connected to the respective light wave path termination processors 1060 to 1063 to perform the multiplexing and demultiplexing of the signaling signal. The signaling processor 1050 is connected to the light wave path termination processors 1060, 1061 and the signaling multiplexers/demultiplexers 1070, 1071 to perform the signaling processing. The signaling processor 1051 is connected to the light wave path termination processors 1062, 1063 and the signaling multiplexers/demultiplexers 1072, 1073 to perform the signaling processing. The SW controller 1030 controls the ADM's 1020, 1021 and the light wave path SW 1040. The SW controller 1031 controls the ADM's 1022, 1023 and the light wave path SW 1041. The standby light wave path selector 1080 performs selection of a standby light wave path. The selector/bridge section 1090 is connected to the signaling multiplexers/demultiplexers 1070, 1071. The selector/bridge section 1091 is connected to the signaling multiplexers/demultiplexers 1072, 1073.

The light wave path termination processors 1060 to 1063 and the selector/bridge sections 1090, 1091 are provided only to the light wave paths terminated in this communication node. The light wave path SW's 1040, 1041, the SW controllers 1030, 1031, and the signaling processors 1050, 1051 are prepared for each wavelength group terminated in this communication node.

The WDM signals inputted from the input-output ports 501-i, 501-(i+1) (hereafter, referred to simply as 501) and 502-i, 502-(i+1) (hereafter, referred to simply as 502) are separated into light wave paths of the respective wavelengths by the wavelength multiplexers/demultiplexers 1010 to 1013. The separated light wave paths are classified into light wave paths of the wavelength group penetrating this communication node and light wave paths of the wavelength group to be terminated. Among them, the light wave paths of the wavelength group penetrating this communication node are transferred to the desired wavelength multiplexers/demultiplexers 1010 to 1013 as they are.

On the other hand, the light wave paths of the wavelength group to be terminated by this communication node are transferred to the ADM's 1020 to 1023. Among them, the light wave paths to be terminated by this communication node are dropped at the ADM's 1020 to 1023, and are transferred to the signaling multiplexing separators 1070 to 1073 through the light wave path SW's 1040, 1041 and the light wave path termination processors 1060 to 1063, and they are separated into the signaling channels and the data signals in the signaling multiplexers/demultiplexers 1070 to 1073. The signaling channels are transferred to the signaling processors 1050, 1051, and the data signals are transferred to the selector/bridge sections 1090, 1091. The selector/bridge section 1090 selects one line among the data signals inputted from the signaling multiplexers/demultiplexers 1070, 1071, and outputs it to the desired input-output port 1001. Similarly, the selector/bridge section 1091 selects one line among the data signals inputted from the signaling multiplexers/demultiplexers 1072, 1073, and outputs it to the desired input-output port 1002.

The light wave paths not to be terminated by this communication node among the light wave paths of the wavelength group to be terminated by this communication node are filtered at the ADM's 1020 to 1023, and are transferred to the wavelength multiplexers/demultiplexers 1010 to 1013.

Furthermore, the data signals inputted from the input-output ports 1001, 1002 are transferred to the desired signaling multiplexers/demultiplexers 1070 to 1073 in the selector/bridge sections 1090, 1091. In the case where the same signal is sent out to a plurality of standby light wave paths, the input data signals are branched in the selector/bridge sections 1090, 1091, and are transferred to the desired signaling multiplexers/demultiplexers 1070 to 1073. After that, the data signals are multiplexed with the signaling channels in the signaling multiplexers/demultiplexers 1070 to 1073, and after that, they are converted into the desired light wave paths in the light wave path termination processors 1060 to 1063, and are inserted at the ADM's 1020 to 1023 through the light wave path SW's 1040, 1041, and they are transferred to the wavelength multiplexers/demultiplexers 1010 to 1013.

The wavelength multiplexers/demultiplexers 1010 to 1013 multiplex the light wave paths filtered/inserted at this communication node, and transfer them to the input-output ports 501, 502 as the WDM signals.

The light wave path termination processing function at the end of the light wave path in the communication node used by the obstacle restoration method described by using Fig. 19 to Fig. 23 is implemented by the light wave path termination processors 1060 to 1063, and similarly, the signaling processing function of performing the path passage switching control of the light wave path setting request information exchange or the like is implemented by the signaling processors 1050, 1051. The light wave path switching function at the time of an obstacle is implemented by the signaling processors 1050, 1051 which switch the ADM's 1020 to 1023 and the light wave path SW's 1040, 1041 through the SW controllers 1030, 1031. When the switching from the working light wave path to the standby light wave path is a physical passage switching, it is desirable that the light wave path SW's 1040, 1041 are implemented by space switches, and when the switching is a wavelength switching, it is desirable that they are wavelength conversion switches. In the case where both are mixed, it is necessary to have both switch functions.

According to the obstacle restoration method, the same signal is transmitted to a plurality of standby light wave paths at the time of an obstacle. This can be implemented in such a way that the ADM's 1020 to 1023 and the light wave path SW's 1040, 1041 are controlled and a plurality of standby light wave paths are set on the WDM light network and by using the selector/bridge sections 1090, 1091, the data signals inputted from the input-output ports 1001, 1002 are branched and are transferred to the respective standby light wave paths. On the other hand, as for the reception, similarly, the reception of the data signals from a plurality of standby light wave paths can be performed in such a way that the ADM's 1020 to 1023 and the light wave path SW's 1040, 1041 are controlled and a plurality of standby light wave paths are set on the WDM light network and those light wave paths are respectively received in the light wave path termination processors 1060 to 1063. Furthermore, when the standby light wave path is identically determined, it is possible to be connected to one standby light wave path by controlling the selector/bridge sections 1090, 1091. Furthermore, after the standby light wave path has identically been determined, the light wave paths which have no relation with the obstacle restoration and the occurrence of an obstacle can be restored in such a way that the signaling processors 1050, 1051 control the ADM's 1020 to 1023 and the light wave path SW's 1040, 1041 through the switch controllers 1030, 1031 and restore the connection of the determined standby light wave path to the state before the occurrence of an obstacle,

The standby light wave path selector 1080 has the standby light wave path information for each wavelength group, and for the spare light wave path selection request from the signaling processors 1050, 1051, it tells one or a plurality of standby light wave path candidates among unused standby light wave paths on the basis of the number of hops, transmitting distance, efficient use of network resources or the like. In the case where part of or all of the standby light wave path selection result information from the light wave path terminating communication node of the other end which is told from the signaling processors 1050, 1051 is different from that of the standby light wave path selected by itself, the standby light wave path selector 1080 compares both standby light wave path candidates, and identically determines the standby light wave path, and notifies the signaling processors 1050, 1051 of it.

In the case where part of or all of the network resources of the standby light wave path are used as the ET light wave path in the normal state, when the communication node shown in Fig. 24 terminates the ET light wave path, the signaling processors 1050, 1051 of this communication node switch the ADM's 1020 to 1023 which drops the ET light wave path to the filtering state when receiving the light wave path setting request information, and they extinguish the ET light wave path and provide network resources for the obstacle restoration.

Furthermore, when receiving the standby light wave path selection result response information, the signaling processors 1050, 1051 can restore the setting of the standby light wave path candidates other than the finally determined standby light wave path, by controlling the ADM's 1020 to 1023 or the light wave path SW's 1040, 1041.

It is desirable that the number of prepared light wave path termination processors 1060 to 1063 is corresponding to the number of standby light wave path candidates for the working light wave paths, but in the actual operation, it is considered that the number of standby light wave paths is larger. In that case, the light wave path SW's 1040, 1041 are controlled to temporally switch the connection between the standby light wave path and the light wave path termination processors 1060 to 1063, and consequently, the states of all standby light wave path candidates can be monitored. By the way, the light wave path termination processors 1060 to 1063 can be arranged on the lower position side of the selector/bridge sections 1090, 1091.

According to the constitution of a communication node like this, the obstacle restoration method shown in Fig. 19 to Fig. 23 can be implemented.

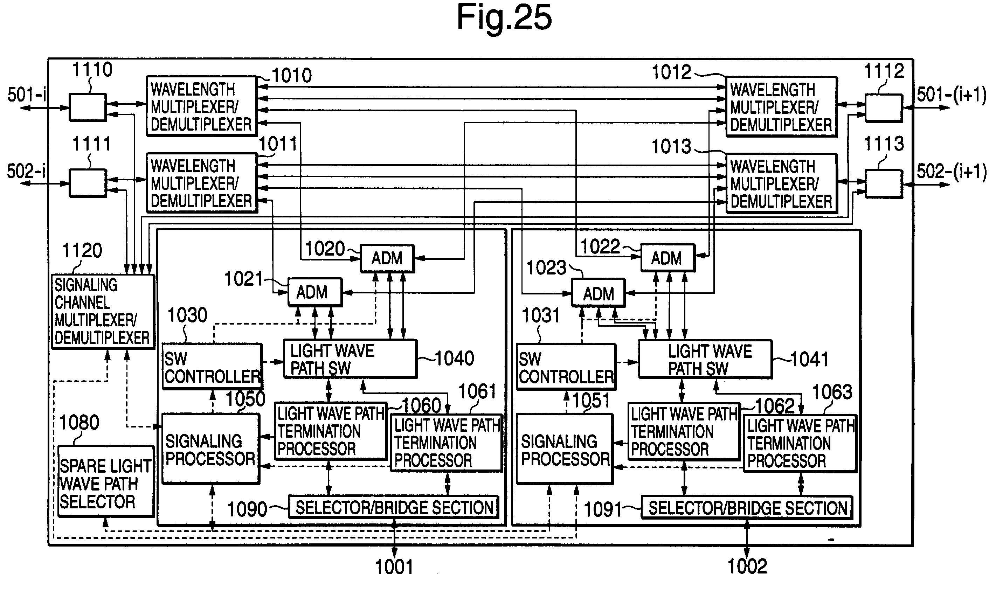

Fig. 25 is a block diagram showing one example of the constitution of a communication node used as the communication nodes 510, 520, 530, 540, 550 in the transmission network in Fig. 19. The communication node shown in Fig. 25 is also used for the practice of the obstacle restoration method. By the way, the WDM transmission network to which this communication node is applied comprises five wavelengths, and four wavelengths are used as the data transfer light wave paths, and one wavelength is used as the signaling path transfer light wave path made by multiplexing signaling channels. This communication node does not multiplex the signaling channel to the main signal data transfer light wave path, but transfers it by another light wave path.

The communication node shown in Fig. 25 is configured in such a way that the signaling path multiplexers/demultiplexers 1110 to 1113 and the signaling channel multiplexer/demultiplexer 1120 are newly added to the communication node shown in Fig. 24 and the signaling multiplexers/demultiplexers 1070 to 1073 are omitted. In Fig. 25, the parts to which referenced numerals identical with those shown in Fig. 24 are given are function blocks identical with those in Fig. 24. Here, the communication node shown in Fig. 25 will be described by mainly referring to the points different from those of the communication node shown in Fig. 24.

The signaling path multiplexers/demultiplexers 1110 to 1113 are respectively inserted between the input-output ports 501-i, 502-i, 501-(i+1), 502-(i+1) and the wavelength multiplexers/demultiplexers 1010 to 1013, and they separate the WDM signals from the input-output ports 501, 502 into the signaling path transfer light wave path and the data transfer light wave path, and transfer the signaling path transfer light wave path to the signaling channel multiplexer/demultiplexer 1120, and transfer the data transfer light wave path to the wavelength multiplexers/demultiplexers 1010 to 1013. Furthermore, the signaling path multiplexers/demultiplexers 1110 to 1113 multiplex the signaling path transfer light wave path from the signaling channel multiplexer/demultiplexer 1120 and the data transfer light wave path from the wavelength multiplexers/demultiplexers 1010 to 1013, and transfer them to the input-output ports 501, 502.

The signaling channel multiplexer/demultiplexer 1120 separates the signaling paths from the signaling path multiplexers/demultiplexers 1110 to 1113 into signaling channels, and transfers them to the signaling processors 1050, 1051 of the wave length group to be terminated. On the other hand, the signaling channel of the wavelength group not to be terminated and the signaling channel from the signaling processors 1050, 1051 are multiplexed to form the signaling paths, and they are converted into the light wave paths to be transferred to the signaling path multiplexers/demultiplexers 1110 to 1113.

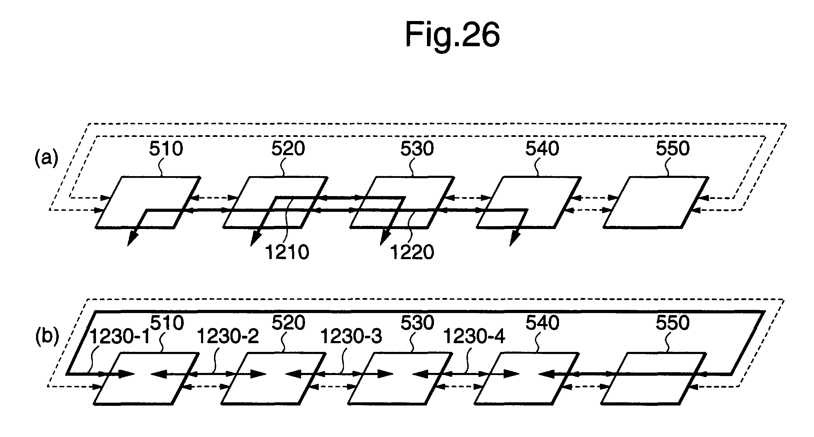

In the case of the communication node shown in Fig. 25, the signaling transfer is performed by a light wave path different from the data transfer light wave path. Therefore, in the network shown in Fig. 26 (a) with a constitution identical with that shown in Fig. 19 (a), a light wave path 1210 is set between the communication nodes 520, 530 on the two-way fiber 501, and in the meantime, even in the case where a light wave path 1210 of the same wavelength group as this light wave path 1210 is set between the communication nodes 510, 540 on the two-way fiber 502 through the communication nodes 520, 530, that is, even in the case where the setting sections of the light wave paths of the same wavelength group are partly overlapped, it is possible to exchange the path switching information of the wavelength group among the communication nodes 510, 520, 530, 540 by setting the signaling channels 1230-1 to 1230-4 as shown in Fig. 26 (b). As a result of that, in the case of the communication node shown in Fig. 24, when multiplexing the signaling channel to the light wave path, the fellow light wave paths of the same wavelength group can be set only in the same section or in the completely different sections, but on the other hand, in the case of the communication node in Fig. 25, this limitation is eliminated, so that the light wave path may more flexibly be set.

Thus, the communication node shown in Fig. 25 makes it possible to implement the obstacle restoration method according to the invention, and in the meantime, it makes it possible to flexibly perform the setting of the light wave path of the WDM optical network by separating the signaling transfer light wave path and the data transfer light wave path.

Since the present invention is configured as described above, the following effects are attained.

Since the obstacle is detected at the end of a light wave path and the obstacle restoration process acts for each wavelength group to which the light wave path belongs, the light wave path can quickly be recovered from an obstacle even when a light wave path of a specific wavelength suffers the obstacle.

Furthermore, since the switching is independently performed at the end of a path for each light wave path, the passage of the light wave path after the obstacle has been restored is shorter than that of a system in which the spot with an obstacle is bypassed, so that the limitation of the scale of a network may be unnecessary.

Furthermore, since the obstacle detection is independently performed at the end of a light wave path for each light wave path, the accuracy is higher than that of a system in which the detection of an obstacle is performed by using the amount of light of the WDM signal, and the degradation of a signal can also be detected as an obstacle. Therefore, the recovery from an obstacle can efficiently be performed.

Furthermore, when a certain light wave path suffers an obstacle, a path switching information is told to the communication node which terminates the light wave path of the same wavelength group through which a standby light wave path corresponding thereto passes. Therefore, in the case where the notification is not received, that is, in the normal state where there is no obstacle, the ET can be contained by using the network resources of the standby light wave path, and the network can efficiently be used.

While this invention has been described in connection with certain preferred embodiments, it is to be understood that the subject matter encompassed by way of this invention is not to be limited to those specific embodiments. On the contrary, it is intended for the subject matter of the invention to include all alternative, modification and equivalents as can be included within the spirit and scope of the following claims.

## Claims

1. A communication node comprising:
a light wave path termination processor circuit which monitors a state of a received light signal transmitted by at least one working light wave path and detects presence or absence of an obstacle from a result thereof;
a light wave path switching circuit which switches a path from said working light wave path to at least one standby light wave path in case of detecting said obstacle;
a bridge circuit which transfers the same signal to each of said at least one standby light wave path; and
a selector circuit which selects one standby light wave path from among said at least one standby light wave path.

2. A communication node comprising:
a wavelength multiplexer/demultiplexer which separates inputted wavelength-multiplexed light signals for each wavelength and multiplexes a filtered light wave path and an inputted light wave path among separated light wave paths;
an ADM in which said light wave path separated by said wavelength multiplexer/demultiplexer is inputted and which takes in said light wave paths to be terminated and outputs the other of said light wave path to said wavelength multiplexer/demultiplexer and outputs a generated light wave path to the wavelength multiplexer/demultiplexer;
a light wave path switch which performs switching of ways of a light wave path taken in by said ADM and a generated light wave path;
a light wave path termination processor circuit which performs detection of an obstacle of a light wave path outputted from said light wave path switch and termination processing of a generated light wave path;
a signaling multiplexer/demultiplexer circuit which separates a signaling channel from a light wave path outputted from said light wave path termination processor circuit and multiplexes a signaling channel to a light wave path generated in an own communication node;
a selector/bridge circuit which transfers a data signal of a light wave path to one piece of said signaling multiplexer/demultiplexer circuit, or which branches said data signal and transfers the signal to a plurality of said signaling multiplexer/demultiplexer circuits at the same time, and which selects and takes in one from among said data signals of light wave paths transferred from a plurality of said signaling multiplexer/demultiplexer circuits;
a signaling processor circuit which receives obstacle information from said light wave path termination processor circuit and information inputted through said signaling channel separated by said signaling multiplexer/demultiplexer circuit, and which generates or processes information related to standby light wave path setting or selection thereof, and which notifies said signaling multiplexer/demultiplexer circuit and outputs the information through said signaling channel, and which controls said ADM, said light wave path switch, and said selector/bridge circuit; and
a standby light wave path selector circuit which selects at least one standby light wave path candidate in response to a standby light wave path selection request received from said signaling processor circuit, and which selects one from among a plurality of pieces of standby light wave paths when receiving a standby light wave path selection determining request including a plurality of pieces of standby light wave path candidate informations from said signaling processor circuit, and which notifies said signaling processor circuit of a result of selection.

3. The communication node according to claim 2, further comprising:
a signaling path multiplexer/demultiplexer circuit which separates a signaling path transfer light wave path and a data transfer light wave path from said inputted wavelength multiplexing signal and outputs said separated data transfer light wave path to said wavelength multiplexer/demultiplexer and multiplexes a generated signaling path transfer light wave path and a WDM signal transferred from said wavelength multiplexer/demultiplexer; and
a signaling path termination processor circuit which receives obstacle information from said light wave path termination processor, and which terminates a signaling path transfer light wave path transferred from said signaling path multiplexer/demultiplexer, and which separates a signaling channel to be processed from said signaling path and transmits a signaling channel not to be processed, and which remultiplexes said signaling path transfer light wave path and said signaling channel, and a signaling channel subjected to signaling processing to generate a signaling path transfer light wave path, and which transfers the generated light wave path to said signaling path multiplexing separator circuit.

4. A WDM network comprising:
a plurality of communication nodes; and
an optical transmission line which circularly connects said plurality of communication nodes,
wherein said plurality of communication nodes comprise communication nodes according to claim 1.

5. The WDM network according to claim 4, wherein
in said WDM network, a signaling channel is set, which transfers information of setting and release of a desired standby light wave path or control information of switching from a working light wave path to a standby light wave path at the time of an obstacle, and
said communication node further comprises a signaling processor circuit which exchanges control information for setting and selecting of a standby light wave path by using said signaling channel.

6. The WDM network according to claim 4, wherein a light wave path allocated to said standby light wave path is normally used as an ET light wave path serving for an additional or auxiliary use if necessary.

7. The WDM network according to claim 5, wherein a light wave path allocated to said standby light wave path is normally used as an ET light wave path serving for an additional or auxiliary use if necessary.

8. The WDM network according to claim 4, wherein
a plurality of working light wave paths have a common standby light wave path, and when one of said plurality of working light wave paths uses said common standby light wave path, said used communication node omits the others of said plurality of working light wave paths from a candidate of the standby light wave path.

9. A network communication method which performs communication by using a light wave path of a certain properly set wavelength, between any two of a plurality of circularly connected communication nodes, comprising:
detecting an obstacle of a working light wave path which is said light wave path used for communication; and
setting a standby light wave path instead of the working light wave path where said obstacle is detected.

10. A network communication method which performs communication by using a light wave path of a certain properly set wavelength and an ET light wave path expected to be used as a standby light wave path at the time of an obstacle, between any two of a plurality of circularly connected communication nodes, comprising:
detecting an obstacle of a current light wave path which is said light wave path used for communication;
setting a standby light wave path instead of the working light wave path where said obstacle is detected; and
issuing a request of switching a light wave path to be used, to said communication node using said ET light wave path requiring stop of use, when setting said standby light wave path.

11. The network communication method according to claim 10,
further comprising:
referring to information of a standby light wave path determined to be used, in said communication node using said ET light wave path, allocating said ET light wave path to a standby light wave path in the case where a determined standby light wave path and said ET light wave path to be used are common, and of restarting to use an ET light wave path in the other cases.

12. The network communication method according to claim 9, wherein
said setting comprises:
transmitting information of a standby light wave path capable of being used as an alternative from one communication node detecting said obstacle between said one communication node and the other performing communication by said working light wave path; and
selecting one from among said standby light wave paths and releasing the other.

13. The network communication method according to claim 9, wherein
said standby light wave path corresponding thereto is set in advance for each of said working light wave paths.

14. The network communication method according to claim 9, wherein said standby light wave path is set to have a passage or a wavelength different from that of said working light wave path.

15. The network communication method according to claim 10, wherein said standby light wave path is set to have a passage or a wavelength different from that of said working light wave path.

16. The network communication method according to claim 12, wherein a selecting order is set in advance to said standby light wave paths, and said standby light wave path is selected according to said selecting order in said selecting.

17. The network communication method according to claim 10, wherein a selecting order is set in advance to said standby light wave paths, and said standby light wave path is selected according to said selecting order in said setting.

18. The network communication method according to claim 16, wherein one of parameters of a number of hops of said standby light wave path, a transmitting distance, an efficiency of network resources, a probability of obstacle restoration, and an error rate of data is used in setting of said selecting order.

19. The network communication method according to claim 17, wherein one of parameters of a number of hops of said standby light wave path, a transmitting distance, an efficiency of network resources, a probability of obstacle restoration, and an error rate of data is used in setting of said selecting order.

20. The network communication method according to claim 9, further comprising:
notifying said communication node which is communicating by using said working light wave path where an obstacle does not occur among a plurality of working light wave paths sharing said set standby light wave path at the time of an obstacle, of the fact that said working light wave path where an obstacle occurs is switched to said standby light wave path; and
eliminating said shared standby light wave path from a candidate of a usable standby light wave path in said communication node receiving said notification.

21. The network communication method according to claim 9, further comprising:
judging whether said set standby light wave path is optimum as a standby light wave path or not; and
resetting an optimum standby light wave path in a case where said set standby light wave path is determined not optimum in said judging.

22. The network communication method according to claim 21, wherein judgment is performed in said judging by using one of a number of hops of a light wave path, a transmitting distance, an efficiency of use of network resources, and a probability of obstacle restoration.
